# EUROPEAN PATENT SPECIFICATION

(11) **EP 1 338 972 B1**
(45) Date of publication and mention of the grant of the patent: **10.01.2018**
(21) Application number: 01998895.5
(22) Date of filing: 27.11.2001
(51) Int. Cl.: G06F 13/00, G06F 12/00, G06F 17/30, H04M 1/2745, H04M 11/00

(54) **RECEIVING DEVICE AND REPEATING DEVICE**
EMPFANGSVORRICHTUNG UND WIEDERHOLUNGSVORRICHTUNG
DISPOSITIF RECEPTEUR ET DISPOSITIF REPETITEUR

(30) Priority: 28.11.2000 JP 2000361796
(43) Date of publication of application: 27.08.2003
(73) Proprietor: NTT DoCoMo, Inc., Tokyo 100-6150 (JP)
(72) Inventor: YABE, Toshiyasu, Chiba-shi, Chiba 263-0024 (JP); KAWABATA, Masaki, Saitama-shi, Saitama 338-0013 (JP); KASHIWABA, Shoji, Yokohama-shi, Kanagawa 222-0021 (JP); NAGAI, Ai, Sagamihara-shi, Kanagawa 229-1131 (JP)
(74) Representative: Hoffmann Eitle
(86) International application number: PCT/JP2001/010322
(87) International publication number: WO 2002/044908

(56) References cited:
- EP-A2- 0 887 755
- JP-A- 9 265 482
- JP-A- 11 242 620
- JP-A- 11 331 426
- JP-A- H11 331 411
- JP-A- 2000 155 756
- US-A- 6 047 313
- US-A- 6 085 195
- KAASINEN E ET AL: "Two approaches to bringing Internet services to WAP devices", COMPUTER NETWORKS, ELSEVIER, AMSTERDAM, NL, vol. 33, no. 1-6, 1 June 2000 (2000-06-01) , pages 231-246, XP004304769, ISSN: 1389-1286, DOI: 10.1016/S1389-1286(00)00041-4
- ORKUT BUYUKKOKTEN ET AL: "Power browser", HUMAN FACTORS IN COMPUTING SYSTEMS, ACM, 2 PENN PLAZA, SUITE 701 NEW YORK NY 10121-0701 USA, 1 April 2000 (2000-04-01), pages 430-437, XP058236086, DOI: 10.1145/332040.332470 ISBN: 978-1-58113-216-8
- WEN-SYAN LI ET AL: "PowerBookmarks", SIGMOD RECORD, ACM, NEW YORK, NY, US, vol. 28, no. 2, 1 June 1999 (1999-06-01), pages 565-567, XP058322907, ISSN: 0163-5808, DOI: 10.1145/304181.304578

## Description

### TECHNICAL FIELD

The present invention relates to a receiving device and a relay device which can perform the registration of addresses.

### BACKGROUND ART

In recent years, mobile stations with a WWW (World Wide Web) browser have come into existence. A user of such a mobile station accesses a host, such as an information provider on the Internet (hereinafter, referred to as "IP") and so on, by using the WWW browser; and can obtain a home page through the host. The home page, specifically, is represented by data in HTML (Hyper Text markup Language) format (hereinafter, merely referred to as "HTML data"). HTML data, of a large number of home pages provided by an IP, includes URLs (Uniform Resource Locator) specifying other links. When a mobile station receives the HTML data, a home page is displayed on the display unit of the mobile station. In this situation, a user can perform the operation of selecting a desired link from the displayed home page. When the user performs the operation, the mobile station accesses the link destination which has been selected by the user. And the user can obtain a variety of information, such as HTML data and so on, provided by the link destination. Some mobile stations are equipped with a function for registering URLs of home pages of an IP, which a user frequently accesses, so as to save labor of directly inputting the URLs when the user accesses the IP next time. Specifically, a character string (title) designated by a title tag of HTML data, and a URL are stored in the memory of a mobile station in correspondence with each other. Thereafter, when the user designates the title, the URL is extracted from the memory and the connection to the host is automatically performed.

When registering the URLs of a plurality of links displayed in a certain web page, a user needed to access each of links; obtain a web page from each of the links; and register the URL contained in the web page. The access operation is not only complicated but also has the drawback of increasing communication costs. HTML data includes URLs and, for example, telephone numbers, therefore a user, after obtaining the HTML data and browsing a web page, cannot phone the owner of a telephone number unless the user memorizes the telephone number.

KAASINEN et al. "Two approaches to bringing Internet services to WAP devices", COMPUTER NETWORKS, ELSEVIER, AMSTERDAM, NL, Vol. 33, no. 1-6, June 2000, pages 231-246, teaches a Business Card Search Service (BCSS) by which the user can search contact information by making queries to a business card database. Here, the BCSS offers three different query forms, a search form that uses only last and first name as search criteria, an extended search form that includes additional search possibilities for title, organization, and the like, and a free text search by which the user can search a string from any of the business card fields. Further, the BCSS consists of an LDAP database, WML and WML Script document templates, and server software written in Java. The server fills in WML document templates with data extracted from the business card database.

JP H11 331411 A describes a terminal being provided with a storage read means for reading data inside a storage means, a document analysis means for analyzing a document read by the storage read means, a telephone number extraction means for extracting a part relating to the telephone number from the document analyzed by the document analysis means, a display means for displaying various information, a selection means for enabling selection by a user and a calling means for judging whether or not the information selected by the selection means is the telephone number extracted by the telephone number extraction means and calling the telephone number in the case of judging that the telephone number is selected.

### DISCLOSURE OF INVENTION

The present invention provides a device for accessing a plurality of destinations as defined by the features of claim 1.

### BRIEF DESCRIPTION OF THE DRAWINGS

Fig. 1 is a block diagram showing the configuration of a mobile communication system according to the first embodiment.
Fig. 2 is a block diagram showing the configuration of mobile station MS according to the first embodiment.
Fig. 3A is a block diagram showing access destination storing table TBL1.
Fig. 3B is a block diagram showing link destination storing table TBL2.
Fig. 4A is a diagram showing an example of a source of HTML data.
Fig. 4B is a diagram showing an example of an image displayed on liquid crystal display 14 in the instance that, mobile station MS obtains the HTML data.
Fig. 5 is a flowchart showing the process of registering a URL by mobile station MS according to the first embodiment.
Fig. 6 is a flowchart showing the process of storing a URL according to the first embodiment.
Fig. 7 is a flowchart showing the process of storing a telephone number according to the first embodiment.
Fig. 8 is a flowchart showing the process of storing a mail according to the first embodiment.
Fig. 9 is a diagram showing an example of an image displayed on liquid crystal display 14 according to the first embodiment.
Fig. 10 is a diagram showing an example of an image displayed on liquid crystal display 14 according to the first embodiment.
Fig. 11 is a diagram showing an example of an image displayed on liquid crystal display 14 according to the first embodiment.
Fig. 12 is a diagram showing address management table TBL3 according to the second embodiment.
Fig. 13 is a diagram showing an example of a source of HTML data according to the second embodiment.
Fig. 14 is a flowchart showing the process of registering a URL by mobile station MS according to the second embodiment.
Fig. 15 is a flowchart showing the process of storing according to the second embodiment.
Fig. 16 is a diagram showing an example of an image displayed on liquid crystal display 14 according to the second embodiment.
Fig. 17 is a block diagram showing the configuration of a mobile communication system according to the third embodiment.
Fig. 18 is a diagram showing an example of an image displayed on liquid crystal display 14 according to the third embodiment.
Fig. 19 is a diagram showing an example of an image displayed on liquid crystal display 14 according to the third embodiment.
Fig. 20 is a diagram showing an example of an image displayed on liquid crystal display 14 according to the fourth embodiment.

### BEST MODE FOR CARRYING OUT THE INVENTION

Embodiments of the present invention will be explained below with reference to drawings. In the embodiments, the present invention is applied to a mobile communication system connected to the Internet.

### [1] First Embodiment

### [1. 1] Configuration of First Embodiment

### (1) Configuration of Entire System

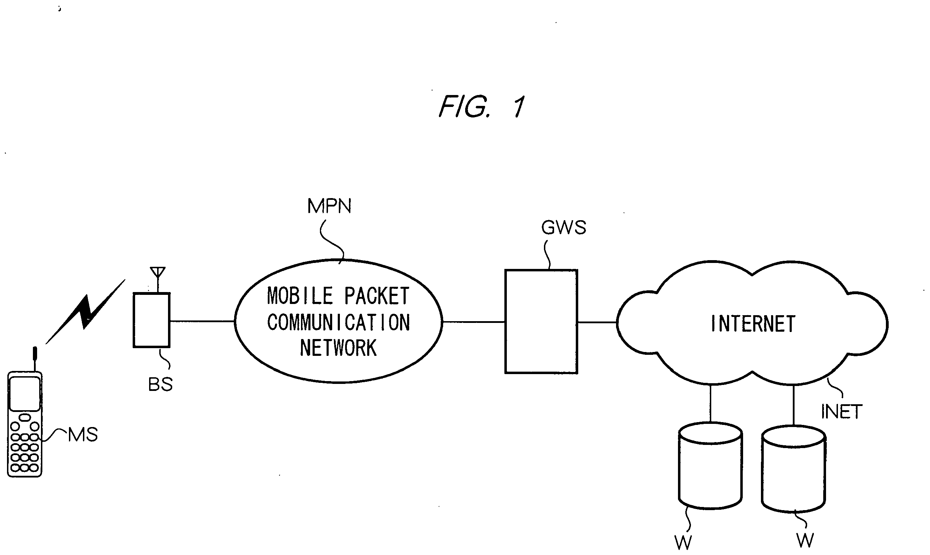

Fig. 1 is a block diagram showing a configuration of a mobile communication system according to the first embodiment. As shown in Fig. 1, the mobile communication system comprises a plurality of mobile stations MS; a mobile packet communication network MPN; a base station BS served by mobile packet communication network MPN; a gateway server GWS; Internet INET; and a plurality of IP servers W. For simplicity, Fig. 1 illustrates one mobile station MS and one IP server W out of a plurality of mobile stations MS and IP servers W, served by the mobile communication system.

Mobile station MS performs packet communications through mobile packet communication network MPN shown in the drawing and performs voice communications through a mobile telephone network not shown. To carry out these functions, mobile station MS comprises a voice input/output unit for enabling a user to perform voice communications; a transmitter-receiver unit for performing radio communications with base station BS; a liquid crystal display unit for displaying a variety of information; a command inputting unit through which information inputting operations such as numeral inputting, character inputting and so on, are performed; and a microcomputer for controlling these units.

Gateway server GWS is a computer system installed in a mobile packet switching station for interconnecting Internet INET with mobile packet communication network MPN and mediates signal transmission/reception between different networks. Specifically, gateway server GWS performs a protocol conversion to adapt data, transmitted from mobile station MS in mobile packet communication network MPN, to TCP/IP (Transmission Control Protocol/Internet Protocol) used on Internet INET, and gateway server GPS transmits the data to Internet INET. Further, gateway server GWS performs a protocol conversion to adapt data transmitted from Internet INET to a transmission protocol used in mobile packet communication network MPN and transmits the data to mobile packet communication network MPN.

Gateway server GWS, upon receiving a GET request of HTTP (Hyper Text Transfer Protocol), inspects a URL included in the GET request. In the instance that, the URL is a general URL on Internet INET, gateway server GWS transfers the GET request to Internet INET. Gateway server GWS then transfers, to mobile station MS, data transmitted from Internet INET in response to the GET request. Gateway server GWS stores HTML data of web pages. In the instance that, a URL, included in a GET request transmitted from mobile stations MS, represents the location of a web page in gateway server GWS, gateway server GWS transmits, to mobile station MS, HTML data of the web page.

IP server W is a server on Internet INET and stores HTML data of web pages. Each web page is assigned a URL. Upon receiving a GET request, in the instance that, a URL included in the GET request is a URL of a web page in IP server W itself, IP server W transmits HTML data of the web page to a source, which has transmitted the GET request.

### (2) Configuration of Mobile Station MS

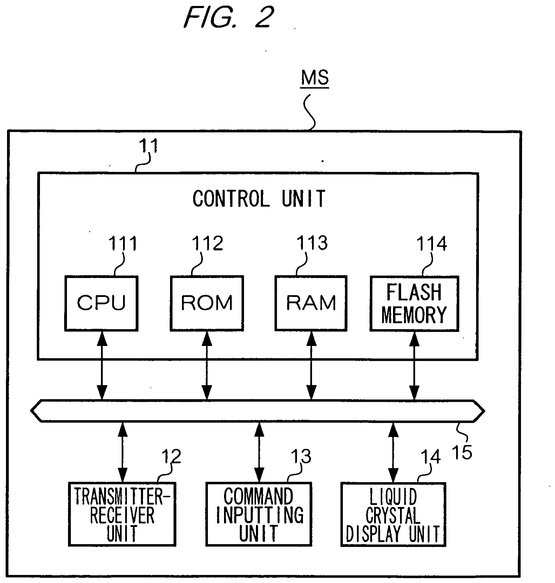

Fig.2 is a block diagram showing the configuration of mobile station MS according to the first embodiment. Mobile station MS comprises a control unit 11; a transmitter-receiver unit 12; a command inputting unit 13; and a liquid crystal display unit 14. Transmitter-receiver unit 12 performs radio communications with base station BS in mobile packet communication network MPN. Command inputting unit 13 is composed of various buttons such as a PB (push button) and a cursor key. When a user operates such a button, command inputting unit 13 provides CPU 111 of control unit 11 with operation data. CPU 111 determines input commands of the user on the basis of the operation data, and performs controls corresponding to the commands. Liquid crystal display unit 14 comprises a liquid crystal panel and so on, and displays information under the control of control unit 11.

Control unit 11 comprises CPU 111; a ROM 112; a RAM 113; and a flash memory 114, and controls each unit of mobile stations MS. ROM 112 stores mobile station IDs for uniquely specifying mobile stations MS in mobile packet communication network MPN; control information and a control program for controlling the whole body of mobile station MS; a WWW browser program for obtaining desired data from another communication device (for example, IP server W) and displaying characters and images; and a program for carrying out the process of registering addresses such as URLs (hereinafter referred to as "URL registration program"). RAM 113 is used as a work area for CPU 111.

CPU 111 reads out control programs stored in ROM 112 and carries out the programs. For example, in the instance that, CPU 111 reads out and carries out a WWW browser stored in ROM 112, the following process is carried out. That is, when a user performs the operation of designating a desired URL by means of command inputting unit 13, CPU 111 performs the operation of transmitting a GET request including the URL to mobile packet communication network MPN. Upon receiving HTML data corresponding to the GET request transmitted from IP server W or gateway server GWS, CPU 111 writes the HTML data in RAM 113 and displays the image represented by the data on liquid crystal display unit 14.

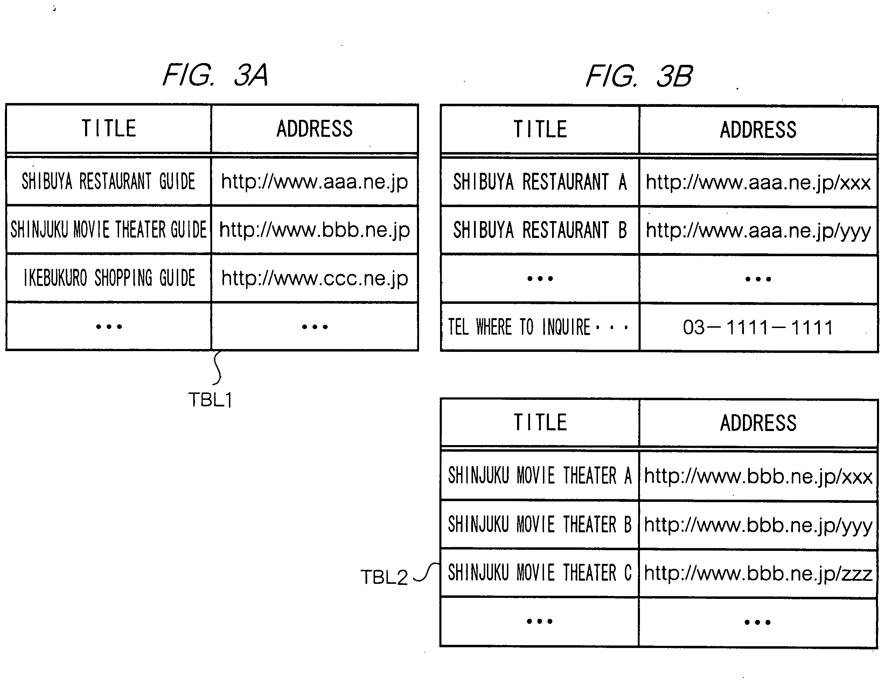

An access destination storing table TBL1 shown in Fig. 3A is provided in flash memory 114 to store URLs. Access destination storing table TBL1 stores URLs of web pages, which a mobile station has accessed, and title data characterizing the URLs. The title data is, for example, a character string designated by a title tag included in HTML data, which a mobile station receives. Further, flash memory 114 stores a link destination storing table TBL2 shown in Fig. 3B. Link destination storing table TBL2, corresponding to each of the URLs stored in access destination storing table TBL1, is provided. Link destination storing table TBL2 stores addresses (a URL, mail address, and telephone number) included in the HTML data of web pages designated by URLs, which access destination storing table TBL1 stores.

Further, link destination storing table TBL2 stores, in correspondence with the addresses (a URL, mail address, and telephone number) of link destinations, title data characterizing the addresses. The title data is not necessarily a character string designated by a title tag, and can be an image.

### [1. 2] Operation of First Embodiment

Next, the operation of the present embodiment having the aforementioned configuration will be explained.

### (1-1) Operation of Mobile station MS in Registering URLs

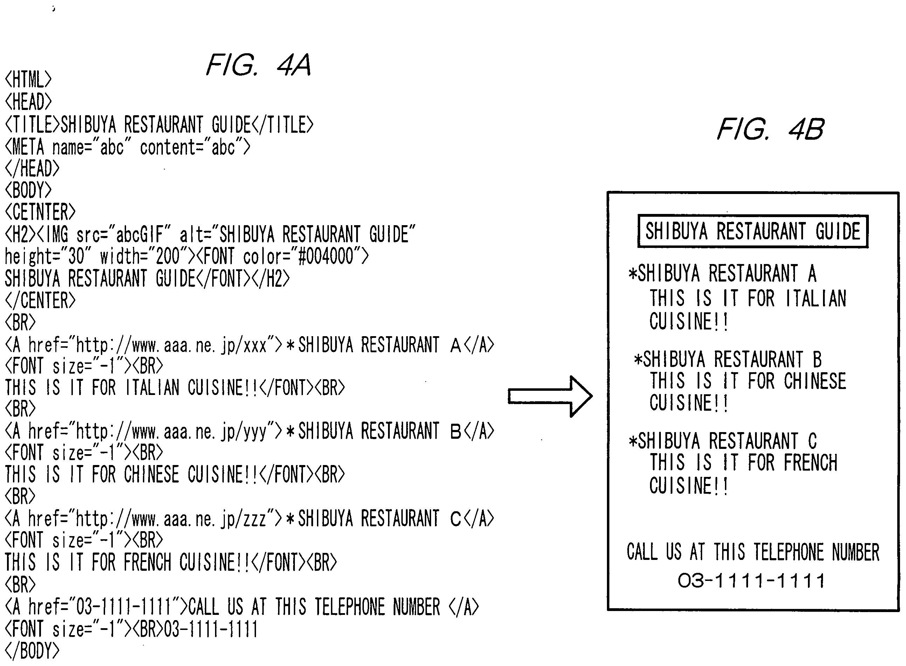

The operation of mobile station MS in registering URLs will be explained below with reference to Figs. 4 to 8.

When a user performs a predetermined operation on command inputting unit 13 of mobile station MS, CPU 111 reads out a WWW browser from ROM 112 and starts to carry out the browsing function. The following processing is performed in the process of carrying out the browsing function. First, CPU 111 performs a packet registration on a packet subscriber processing unit (not shown). The packet registration is a registration procedure by which, mobile station MS can receive a packet switching service from mobile packet communication network MPN. When the packet registration is performed, mobile station MS can perform communications with gateway server GWS.

Then, when the user inputs a URL corresponding to a home page of IP server W by means of command inputting unit 13 of mobile station MS, CPU 111 of mobile station MS transmits a GET request including the URL to mobile packet communication network MPN through transmitter-receiver unit 12. Upon receiving the GET request, gateway server GWS transfers the GET request to Internet INET. Upon receiving the GET request, IP server W transmits HTML data corresponding to the GET request to mobile station MS through gateway server GWS. Next, when transmitter-receiver unit 12 of mobile station MS receives the HTML data transmitted form IP server W, CPU 111 stores the received HTML data in RAM 113 and displays the image represented by the HTML data on liquid crystal display unit 14.

Fig. 4A is a diagram showing an example of a source of HTML data according to the first embodiment, Fig. 4B is a diagram showing an example of an image displayed on liquid crystal display unit 14 of mobile station MS which has obtained the HTML data. In Fig. 4A, <TITLE>< /TITLE> is a title tag of HTML data. <A herf = "" ></A> is an anchor tag and designates a telephone number, a mail address, a URL of a link destination, or the like.

In the situation that the image shown in Fig. 4B is displayed, when the user operates the cursor key, CPU 111 temporarily selects a menu item and highlights the temporarily selected character string. In Fig. 4B, "Shibuya restaurant A" is temporarily selected. In this situation, when the user presses the decision button of command inputting unit 13, CPU 111 selects the URL designated by the anchor tag corresponding to "Shibuya restaurant A", that is to say, "http://www.aaa.ne.jp/xxx". Next, CPU 111 transmits, to mobile packet communication network MPN, a GET request of HTTP including the URL through transmitter-receiver unit 12.

An anchor tag can designate a telephone number. In the example shown in Fig. 4, the anchor tag corresponding to the character string "Please contact us" is an anchor tag designating a telephone number. In the situation that the character string "Please contact us" is highlighted, and the user presses the decision button of command inputting unit 13, CPU 111 extracts the character string "03-1111-1111" designated by the anchor tag. The extracted character string is a numeral of a predetermined digit number beginning with zero (for example, nine to eleven digits), therefore CPU 111 determines that the character string is a telephone number. CPU 111 then carries out the operation of calling "03-1111-1111" .

When the character string which the user has selected and decided on is, for example, the anchor tag designating "xxx@xxx.ne.jp", CPU 111 determines that the character string is a mail address and carries out the operation of transmitting an electronic mail to the destination of the mail address.

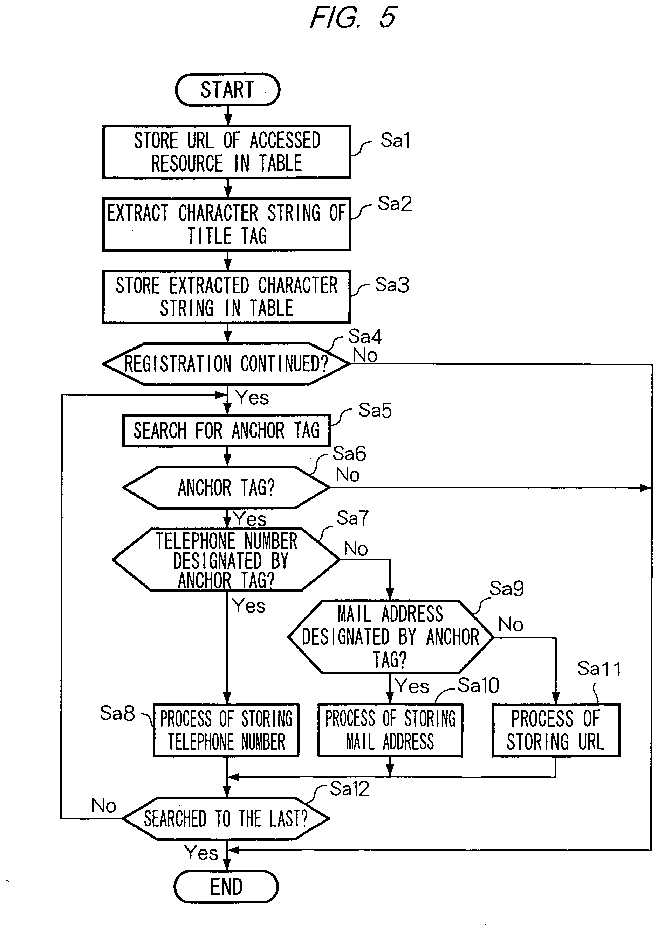

After the aforementioned operation of transmitting a GET request, calling, or transmitting an electronic mail, when the user performs a predetermined operation on command inputting unit 13, CPU 111 reads out the URL registration program from ROM 112 and carries out the processing shown in Fig. 5. Specifically, CPU 111 stores, in access destination storing table TBL1, the URL of the web page represented by the HTML data (step Sa1). Next, CPU 111 extracts the character string designated by the title tag stored in RAM 113 (step Sa2), and stores the character string as title data in access destination storing table TBL1 (step Sa3).

For example, in the instance that, HTML data obtained from IP server W is HTML data shown in Fig. 4A, CPU 111 extracts the character string following <TITLE> in the HTML data, that is, the character string "restaurant guide in Shibuya". CPU 111 then stores the character string "restaurant guide in Shibuya" in access destination storing table TBL1.

After storing the URL in access destination storing table TBL1, CPU 111 displays the message "Do you want to register the URL of the link destination?" or the like, on liquid crystal display unit 14. In response to the message, when the user performs the input operation indicating that he/she will conclude the process of registration (step Sa4 "No"), CPU 111 concludes the process of registering. On the other hand, when the user performs the input operation indicating that he/she will register the URL of the link destination (step Sa4 "Yes"), CPU 111 searches for an anchor tag from the start of the HTML data (step Sa5).

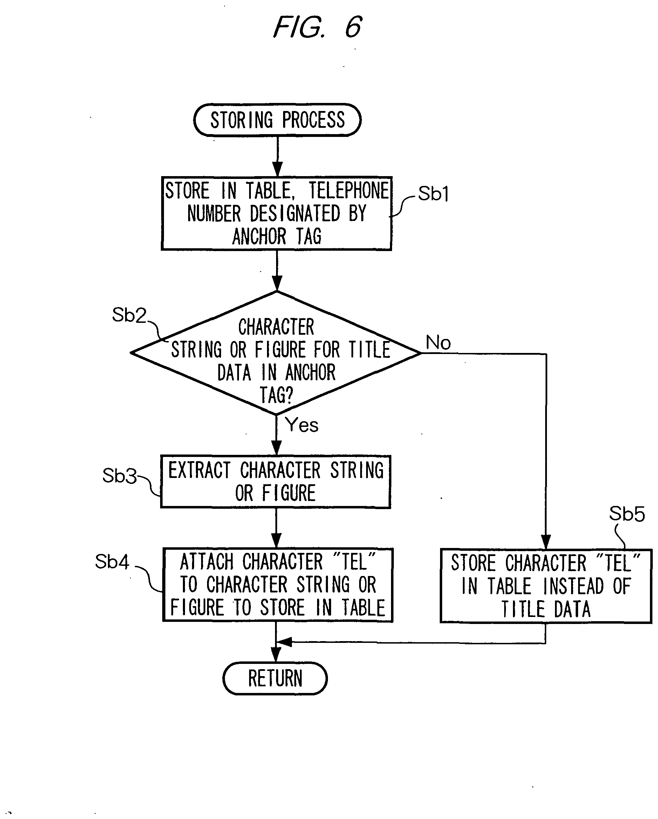

As a result of searching for an anchor tag, in the instance that, an anchor tag is not found in any part of the HTML data (step Sa6 "No"), the processing comes to an end. As a result of searching, if, on the other hand, an anchor tag is found (step Sa6 "Yes"), CPU 111 determines whether a telephone number is designated by the found anchor tag (step Sa7). When CPU 111 determines that a telephone number is designated (step Sa7 "Yes"), CPU 111 carries out the process of storing telephone numbers shown in Fig. 6 (step Sa8).

First, CPU 111 extracts the telephone number designated by the anchor tag and stores the telephone number in link destination storing table TBL2 (step Sb1 in Fig. 6). CPU 111 then determines whether character strings or figures which can be used as title data exist or not in the anchor tag (step Sb2 in Fig. 6). In the instance that, character strings or figures exist (step Sb2 "Yes" in Fig. 6), CPU 111 extracts the character strings or the figures. CPU 111 then adds, to these character strings or figures, a character indicating that the address designates a telephone number (for example, "TEL") and stores the character strings or figures as title data in link destination storing table TBL2 (step Sb3, step Sb4 in Fig. 6). In Fig. 4, the character string "Please contact us" is described in an anchor tag. In this case, CPU 111 adds, for example, the character "TEL" to the character string "Please contact us" and stores the character string as title data of link destination storing table TBL2 (refer to Fig. 3B). And, in the instance that, an image tag designating image data is included in between the anchor tag <A herf = > and </A>, CPU 111 stores the image data as title data in link destination storing table TBL2.

On the other hand, in the instance that, character strings or figures do not exist in an anchor tag (step Sb2 "No" in Fig. 6), CPU 111 stores, in link destination storing table TBL2, a character indicating that the address represents a telephone number, for example, the character "TEL" and so on, as title data instead of information, such as character strings and so on, to be registered as title data. CPU 111 then concludes the processing (step Sb5).

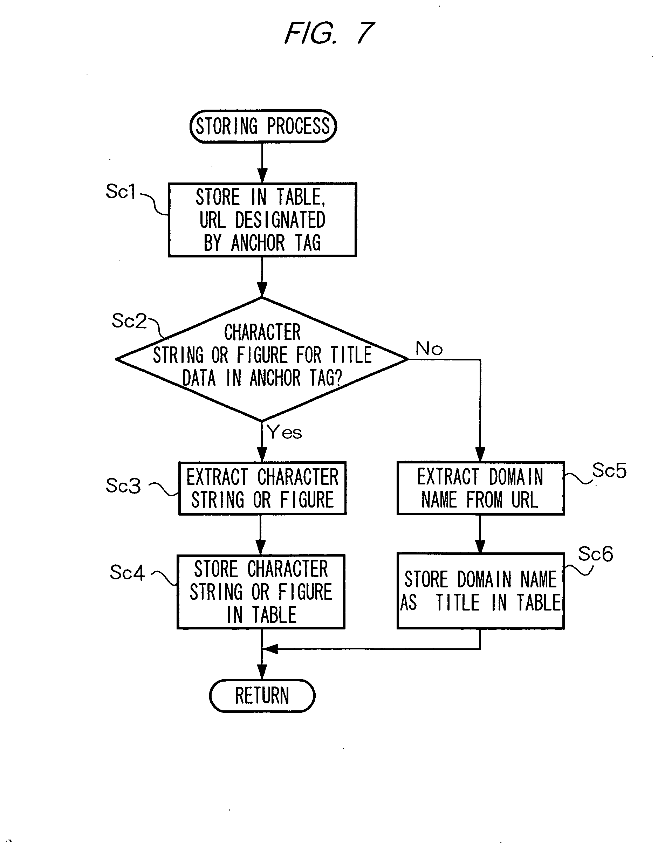

In the instance that, a telephone number is not designated by the anchor tag (step Sa7 "No"), CPU 111 determines whether a mail address is designated by the anchor tag (step Sa9). In the instance that, CPU 111 determines that a mail address is not designated (step Sa9 "No"), CPU 111 carries out the process of storing URLs shown in Fig. 7 (step Sa11).

First, CPU 111 extracts the URL designated by the anchor tag and stores the URL in link destination storing table TBL2 (step Sc1 in Fig. 7). Next, CPU 111 determines whether character strings or figures which can be used as title data exist in the anchor tag (step Sc2 in Fig. 7). Then, in the instance that, the character strings or figures exist (step Sc2 "Yes" in Fig. 7), CPU extracts the character strings or the figures and stores them as title data in link destination storing table TBL2 (step Sc3, step Sc4 in Fig. 7). In the example shown in Fig. 4, the character string " * Shibuya restaurant A" is described in an anchor tag, and CPU 111 stores the character string "* Shibuya restaurant A" as title data of link destination storing table TBL2. In the instance that, an image tag is included in the anchor tag, CPU 111 stores image data designated by the image tag as title data of link destination storing table TBL2.

As a result of the determination in step Sc2 in Fig. 7, when character strings which can be used as title data do not exist in the anchor tag ("No"), CPU 111 extracts a domain name ("aaa.ne.jp" in Fig. 4) from URLs which have been stored in link destination storing table TBL2 (step Sc5 in Fig. 7). CPU 111 then stores the extracted domain name as title data in link destination storing table TBL2 (step Sc6 in Fig. 7).

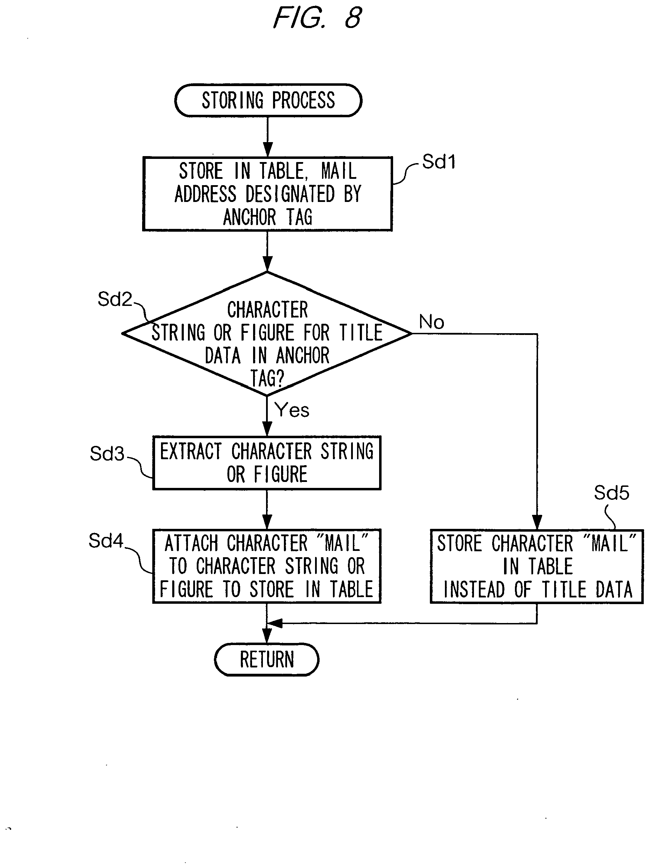

On the other hand, as a result of the determination in step Sa9 in Fig. 5, in the instance that, a mail address is designated by the anchor tag, CPU 111 carries out the process of storing mail addresses shown in Fig. 8 (step Sa10). First, CPU extracts the mail address designated by the anchor tag and stores the mail address in link destination storing table TBL 2 (step Sd1 in Fig. 8). Next, CPU 111 determines whether character strings or figures which can be used as title data exist in the anchor tag (step Sd2 in Fig. 8). In the instance that, the character strings or figures exist (step Sd2 "Yes"), CPU 111 extracts the character strings or the figures. CPU 111 then adds, to these character strings or figures, a character (for example, "mail") indicating that the address designates a mail address, and stores the character strings or figures as title data in link destination storing table TBL2 (step Sd3, step Sd4 in Fig. 8). The instance that the image tag designating image data is included between the anchor tag <A herf = > and </A>, is similar to the process of storing telephone numbers, therefore the instance will not be detailed.

On the other hand, in the instance that, character strings or figures which can be used as title data do not exist in the anchor tag (step Sd2 "No" in Fig. 8), CPU 111 stores, in link destination storing table TBL2, for example, the character "mail" as title data, instead of information, such as character strings and so on, to be registered as title data. CPU 111 then concludes the processing (step Sd5).

After the processing for one anchor tag, CPU 111 determines whether anchor tags have been searched right through to the end of the HTML data (step Sa12). And, in the instance that, CPU 111 determines that searches have been completed (step Sa12 "Yes"), CPU concludes the registration operation. On the other hand, if CPU 111 determines that searches have not been completed (step Sa12 "No"), CPU 111 carries out once again the operations of Sa5 to Sa9 described above.

### (1-2) Operation of Mobile Station MS in Searching for URLs

Next, the operation of mobile station MS in searching for URLs stored in access destination storing table TBL1 or link destination storing table TBL2 will be explained. In the following explanation, to be more specific, we assume that the content of access destination storing table TBL1 and link destination storing table TBL2 stored in flash memory 114 is similar to that shown in Fig. 3A and Fig. 3B. The following process can be carried out before mobile station MS performs a packet registration, however, in the following explanation we assume that the following process starts after a packet registration is made.

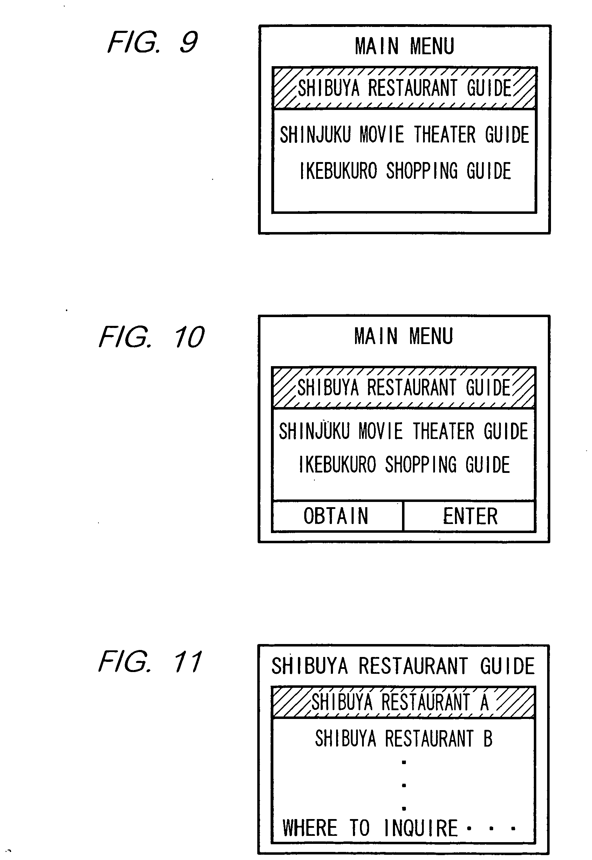

First, when a user performs a predetermined operation on command inputting unit 13, CPU 111 reads out title data from access destination storing table TBL1 and supplies liquid crystal display unit 14 with the title data. Consequently, a title is displayed on liquid crystal display unit 14. Fig. 9 is a diagram showing an example of an image displayed on liquid crystal display unit 14. At this stage, when the user, for example, operates the cursor key of command inputting unit 13 and temporarily selects a character string, CPU 111 highlights the character string. In Fig. 9, "restaurant guide in Shibuya" is temporarily selected. In this situation, when the user presses the decision button of command inputting unit 13, CPU 111 updates the screen so as to display buttons, which the user can select, in a predetermined area of the last line on liquid crystal display unit 14.

Fig. 10 is an example of the screen which is displayed when "restaurant guide in Shibuya" has been selected. When the user selects "obtain", by operating command inputting unit 13, CPU 111 reads out, from access destination storing table TBL1, the URL corresponding to "restaurant guide in Shibuya", that is "http://www.aaa.ne.jp". CPU 111 then transmits a GET request including the URL to mobile packet communication network MPN.

When the user selects "enter", CPU 111 reads out title data, which has been stored in link destination storing table TBL2, corresponding to "restaurant guide in Shibuya" and supplies liquid crystal display unit 14 with the title data. Consequently, the image shown in Fig. 11 is displayed on liquid crystal display unit 14. In this situation, when the user selects, for example, "Shibuya restaurant A" by means of command inputting unit 13, CPU 111 reads out the URL corresponding to "Shibuya restaurant A", that is "http://www.aaa.ne.jp/xxx", from link destination storing table TBL2 and transmits a GET request including the URL to mobile packet communication network MPN.

On the other hand, when the user selects the message "Please contact us" by means of command inputting unit 13, CPU 111 reads out the telephone number corresponding to "Please contact us", that is,"03-1111-1111", and carries out the operation of calling the telephone number. In the instance that, a mail address is stored in link destination storing table TBL2, for example, the following "mail xyz@abc.ne.jp" is displayed. When the user selects the mail address, the process of transmitting an electronic mail to the destination of the mail address is carried out.

Access-information (a URL, mail address, or telephone number) included in the obtained HTML data is automatically registered in this manner, so that a user does not need to perform wasteful operations such as accessing link destinations only to bookmark the link destinations. Link destination storing table TBL2 can store character strings or figures designated by anchor tags as title data. Thus, a user can instantly know contents of web pages represented by stored addresses, on the basis of the addresses. Searches are performed in two steps of access destination storing table TBL1 and link destination storing table TBL2, so that a user can easily search for a desired URL out of registered URLs.

Access destination storing table TBL1 is not provided and only link destination storing table TBL2 may be provided. The URLs and so on, of access destinations and link destinations may be stored in link destination storing table TBL2. It is possible to omit URLs of access destinations. Telephone numbers which have been stored in link destination storing table TBL2 can be used not only for conversations but also for data communications between mobile stations MS. The data to be registered does not necessarily need to be determined by using an anchor tag. For example, in the instance that, a character string surrounded by " #" exists in the received data, the character string may be stored in link destination storing table TBL2. The data format which IP servers W provides is not limited to the HTML format.

### [2] Second Embodiment

### [2. 1] Configuration of Second Embodiment

The configuration of the mobile communication system according to the present embodiment is similar to the one shown in Fig. 1. Thus, unless otherwise specified, components of the configuration according to the present embodiment are shared by the first embodiment and perform the same operation as those of the first embodiment.

In the present embodiment, flash memory 114 of mobile station MS stores an address management table TBL3 instead of the aforementioned access destination storing table TBL1 and link destination storing table TBL2.

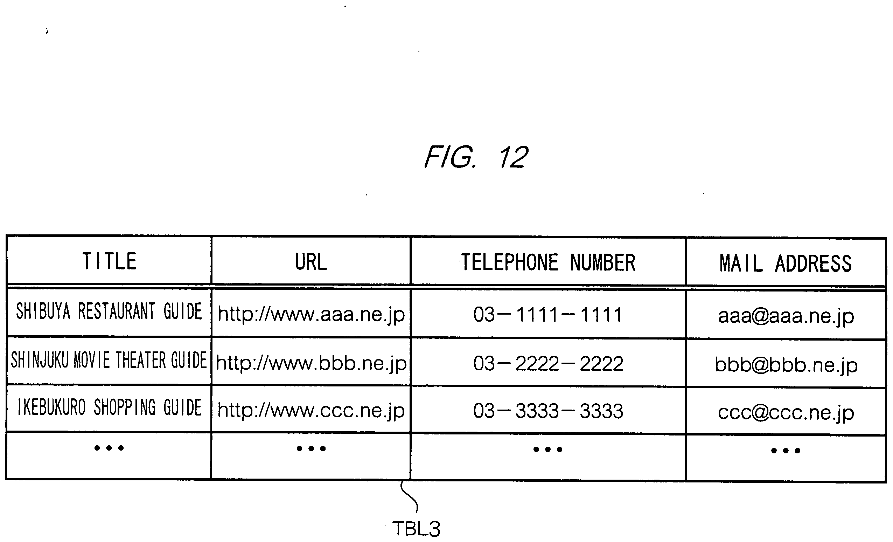

Fig. 12 is a diagram showing the content of address management table TBL3. Address management table TBL3 stores URLs of home pages and so on, which the user has actually accessed by using mobile station MS; title data charactering the URLs; and telephone numbers and mail addresses corresponding to the pages, so as to link them.

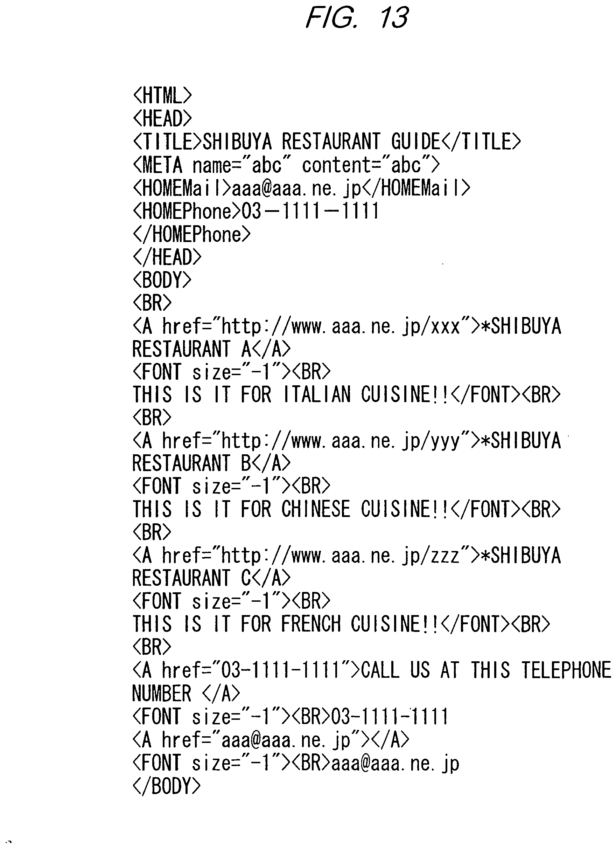

Fig. 13 is a diagram showing an example of HTML data, which mobile station MS has received in the present embodiment. As shown in Fig. 13, the character string <HOMEMail></HOMEMail> and < HOMEPhone ></ HOMEPhone > are described in the HTML data transmitted from IP servers W. <HOMEMail></HOMEMail> is the tag designating a mail address of the webmaster of the page and hereinafter, referred to as home mail tag. On the other hand, < HOMEPhone></HOMEPhone> is the tag designating a telephone number of the webmaster of the page, and referred to as home phone tag.

The telephone number and the mail address, designated by these tags, are stored in address management table TBL3 in correspondence with the URL of the page. In the instance that, HTML data does not include these tags, predetermined telephone numbers and so on in the page are stored in address management table TBL3.

### (2-1) Operation of Mobile Stations MS in Registering URLs

Next, the operation of the present embodiment having the aforementioned configuration will be explained. First, when a user performs a predetermined operation on command inputting unit 13 of mobile station MS, CPU 111 reads out a WWW browser from ROM 112 and performs a packet registration on a packet subscriber processing unit (not shown).

Then, when the user performs the input designating a URL of a home page of IP server W by means of command inputting unit 13 of mobile station MS, CPU 111 of mobile station MS transmits a GET request of HTTP including the URL to mobile packet communication network MPN through transmitter-receiver unit 12. Upon receiving the GET request transmitted from mobile station MS, IP server W replies, to mobile station MS, HTML data corresponding to the URL included in the received GET request through Internet INET.

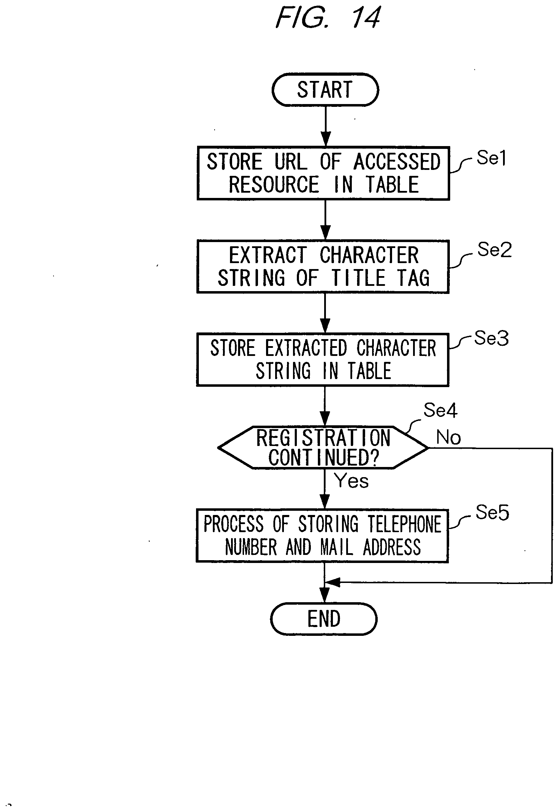

When transmitter-receiver unit 12 of mobile station MS receives the HTML data from IP server W, CPU 111 stores the HTML data in RAM 113 and displays the image corresponding to the HTML data on liquid crystal display unit 14. In this situation, when the user performs a predetermined inputting operation to register the URL, CPU 111 reads out the aforementioned URL registration program from ROM 112 and carries out the processing shown in Fig. 14.

First, CPU 111 stores the URL of the page corresponding to the HTML data in address management table TBL3 (step Se1). Next, CPU 111 extracts the character string designated by a title tag from data stored in RAM 113 (step Se2). CPU 111 stores the extracted character string as title data in address management table TBL3 (step Se3). Next, CPU 111 displays, for example, "Do you want to register the telephone number and the mail address corresponding to this page?" or the like, on liquid crystal display unit 14 and urges the user to make a decision. As a result, in the instance that the user performs the input operation to conclude the registration (step Se4 "No"), CPU 111 concludes the processing.

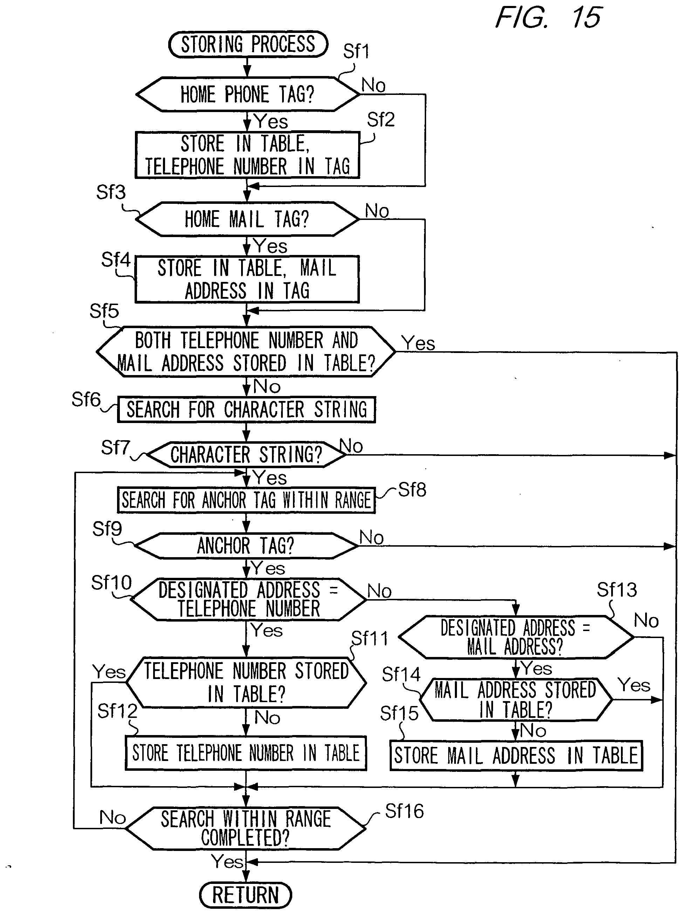

On the other hand, in the instance that, the user performs the input operation to register the telephone number and the mail address corresponding to the page (step Se4 "Yes"), CPU 111 carries out the process of storing shown in Fig. 15 (step Se5). First, CPU 111 determines whether a home phone tag exists in HTML data stored in RAM 113 (step Sf1). In the instance that, a home phone tag exists (step Sf1 "Yes"), CPU 111 extracts the telephone number designated by the home phone tag and stores the telephone number in address management table TBL3 in correspondence with the URL of the page (step Sf2). For example, in the instance that, the content of HTML data is the one shown in Fig. 13, CPU 111 extracts the telephone number "03-1111-1111" designated by a home phone tag and stores the telephone number in address management table TBL3. In the instance that, a home phone tag does not exist in HTML data, CPU 111 does not store a telephone number (step Sf1 "No").

Next, CPU 111 determines whether a home mail tag exists in the HTML data (step Sf3). In the instance that, a home mail tag exists (step Sf3 "Yes"), CPU 111 extracts the mail address designated by the home mail tag ("aaa@aaa.ne.jp") and stores the mail address in address management table TBL3 in correspondence with the URL of the page (step Sf4). In the instance that, HTML data does not contain a home mail tag as shown in Fig. 4A, CPU 111 does not store a mail address (step Sf3 "No").

Next, CPU 111 determines whether address management table TBL3 has already stored a combination of a telephone number and a mail address in correspondence with the URL of the page (step Sf5). In the instance that, the combination of a telephone number and so on, has already been stored (step Sf5 "Yes"), CPU 111 concludes the processing.

On the other hand, in the instance that, both or either of a telephone number or a mail address has not been stored (step Sf5 "No"), CPU 111 searches the HTML data for a predetermined character string (step Sf6). Any character string can be a predetermined character string as long as the character string represents the webmaster of the page. For example, a character string to be searched for is "enquiry". The user may input the character string to be searched for. For example, in the step Sf6, the image "Please input a character string to be searched for." and so on, is displayed on liquid crystal display unit 14 of mobile stations MS, which urges the user to input a character string to be searched. In the instance that, CPU 111 can not extract these predetermined character strings (for example, "inquiry") (step Sf7 "No"), CPU 111 concludes the processing.

In the instance that, CPU 111 extracts a character string to be searched for (step Sf7 "Yes"), CPU 111 searches for an anchor tag from the data within a predetermined range of the character string (step Sf8) for example, 80 bites of data. This is to prevent CPU 111 from extracting anchor tags designating addresses which are not concerned with the character string at all. In the instance that, CPU 111 cannot extract an anchor tag (step Sf9 "No"), CPU 111 concludes the processing.

In the instance that, CPU 111 extracts an anchor tag (step Sf9 "Yes"), CPU 111 determines whether the address designated by the anchor tag is a telephone number (step Sf10). In the instance that, it is determined that the address is a telephone number (step Sf10 "Yes"), CPU 111 determines whether the telephone number corresponding to the URL of the page has already been stored in address management table TBL3 (step Sf11).

In the instance that, the telephone number has not been stored (step Sf11 "No"), CPU 111 stores the telephone number and the URL of the page, in address management table TBL3 in correspondence with each other (step Sf12). In the instance that, the telephone number has been stored (step Sf11 "Yes"), CPU 111 does not store the telephone number.

In step Sf9, in if it is determined that the address designated by the anchor tag is not a telephone number, CPU 111 determines whether the address is a mail address (step Sfl3). In the instance that, CPU 111 determines that the address designated by the anchor tag is a mail address (step Sf13 "Yes"), CPU 111 determines whether the mail address corresponding to the URL of the page has been stored in address management table TBL3 (step Sf14). In the instance that, the mail address has not been stored (step Sf14 "No"), CPU 111 stores the mail address and the URL of the page, in address management table TBL3 in correspondence with each other (step Sfl5).

In the instance that, it is determined that the address designated by the anchor tag is not a mail address (step Sf13 "No") or the mail address has already been stored (step Sf14 "Yes"), CPU 111 does not store the mail address.

Next, CPU 111 determines whether it has completed searching for all anchor tags within the range to be searched (step Sf16). In the instance that, CPU 111 determines that it has not completed searching (step Sf16 "No"), CPU 111 repeats the process of steps Sf8 to Sf16. In the instance that, CPU 111 determines that it has completed searching, CPU 111 concludes the process of storing.

### (2-2) Operation of Mobile Station MS in Searching for URLs

Next, the operation of mobile station MS in searching for URLs stored in address management table TBL3 will be explained. In the following explanation, to be more specific, we assume that the content of address management table TBL3 stored in flash memory 114 is similar to the one shown in Fig. 12. The following process can be carried out before mobile station MS performs a packet registration, however, in the following explanation we assume that the following process starts after the packet registration is made.

First, when a user operates a predetermined button of command inputting unit 13, CPU 111 reads out title data from address management table TBL3 and provides liquid crystal display unit 14 with the title data. Consequently, the image shown in Fig. 9 is displayed on liquid crystal display unit 14. In this situation, when the user, for example, performs the inputting operation to select "restaurant guide in Shibuya" described in Fig. 9 by means of command inputting unit 13, CPU 111 updates the image displayed on liquid crystal display unit 14.

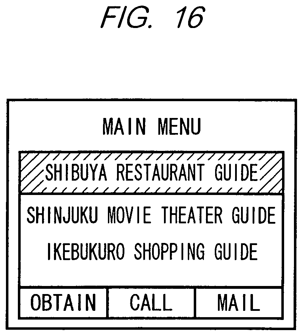

Fig. 16 is an example of the updated screen. In the instance that, "obtain" is selected in Fig. 16, CPU 111 reads out the URL corresponding to the selected title data and transmits a GET request including the URL to mobile packet communication network MPN. In the instance that, "calling" is selected, CPU 111 carries out the operation of calling the telephone number ("03-1111-1111"), which has been stored in correspondence with the selected title. In the instance that, "mail" is selected, CPU 111 carries out the operation of transmitting an electronic mail to the destination of the mail address, which has been stored in correspondence with the selected title.

As described above, mobile stations of the present embodiment do not register URLs of all link destinations included in accessed web page, but register one telephone number and one mail address which are included in the page. Thus, unnecessary addresses can be prevented from being registered. The amount of information stored in a flash memory is less than that of the first embodiment, therefore the storage capacity of the flash memory can be decreased.

### [3] Modifications of First and Second embodiment

### <Modification 1-1>

In the first embodiment, telephone numbers designated by anchor tags are registered in link destination storing table TBL2, however a telephone directory may be provided in flash memory 114 of mobile station MS and register the telephone numbers.

### <Modification 1-2>

In the first and second embodiment, character strings designated by anchor tags are a URL, a mail address, or a telephone number. However, the invention is not limited to the aforementioned character strings. The kind of an anchor tag may be another character string other than the aforementioned character strings. Further, locations for registration (for example, a telephone directory or a mail address directory) or kinds of information to be registered may be changed according to kinds of anchor tags used. That is, a user can freely select not only items to be registered but also the method of management.

### <Modification 1-3>

In the first and second embodiment, mobile station MS has the connection for communicating with Internet IP server W through gateway server GWS. The invention is not limited to the aforementioned connection method, and personal computers may also have the connection for communicating with Internet INET through a fixed telephone network. In this case, the personal computers receive HTML data from Internet INET and carry out the process of registration shown in Figs. 5 to 8 or Figs 14, 15.

### [4] Third Embodiment

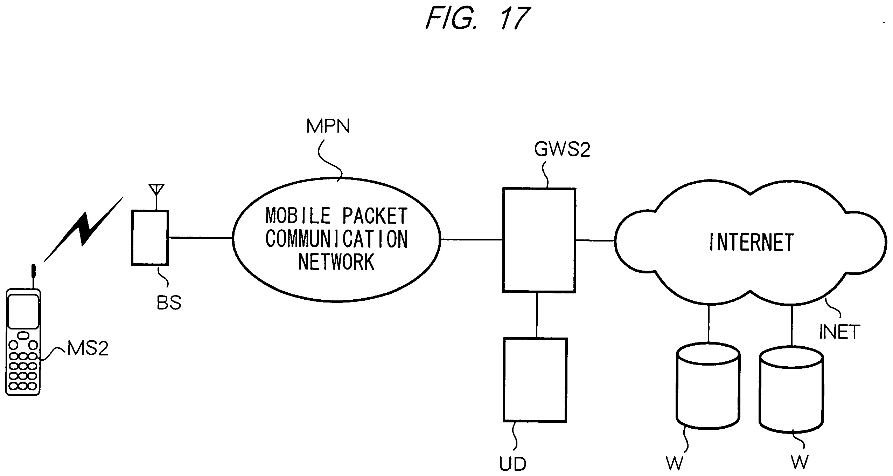

Fig. 17 is a block diagram showing the configuration of the mobile communication system according to the third embodiment. In Fig. 17, components corresponding to each component of Fig. 1 are assigned the same signs as those of Fig. 1.

In the mobile packet communication system according to the present embodiment, unlike the first embodiment, mobile station MS2 transmits a request for registering URLs to gateway server GWS2, and gateway server GWS2 carries out the process of registering the URLs. Thus, access destination storing table TBL1, and link destination storing table TBL2 are not provided in flash memory 114 of mobile station MS2. Gateway server GWS2 has the same function of relaying communications as gateway server GWS shown in the first embodiment, and has a function of registering URLs according to instructions of mobile station MS2 as described below.

Gateway server GWS2 comprises a URL registration database UD. URL registration database UD comprises access destination storing table TBL1, and link destination storing table TBL2 (refer to Figs. 3A, 3B) which correspond to each mobile station MS2. Each table is assigned a URL. Gateway server GWS2, upon receiving a GET request including a URL of either of the aforementioned tables from mobile station MS2, transmits HTML data of information (title data, URL, telephone number, or mail address), which has been stored in the table designated by the URL.

The data format of each of the aforementioned tables can take an arbitrary format. However, data transmitted from gateway server GWS2 to mobile station MS2 must be HTML data. In the instance that, the data format of each aforementioned table is not an HTML format, a conversion of the data format is performed by gateway server GWS2.

Now, methods by which mobile station MS2 accesses each table of URL registration database UD will be described below.

### (i) First Method

In the first method, the URL of access destination storing table TBL1 corresponding to mobile station MS2 is registered in advance in the flash memory and so on, of mobile station MS2. In this case, when a user operates command inputting unit 13 and inputs a predetermined instruction, CPU 111 transmits, to mobile packet communication network MPN, a GET request including the URL of link destination storing table TBL2 corresponding to mobile station MS2. Gateway server GWS2, upon receiving the GET request, reads out link destination storing table TBL2 of the URL, generates HTML data corresponding to information which has been stored in the table, and transmits the HTML data to mobile station MS2.

### (ii) Second Method

In the second method, when mobile station MS2 accesses a home page of gateway server GWS2, gateway server GWS2 transmits menu data in the HTML format, and writes in the menu data, the URL of link destination storing table TBL2 corresponding to mobile station MS2. In this case, gateway server GWS2 extracts a mobile station ID included in the received GET request and specifies the mobile station which has transmitted it on the basis of the mobile station ID. Gateway server GWS2 transmits, to mobile station MS2, menu data whose URL of the table corresponding to mobile station MS2 is designated by an anchor tag.

Gateway server GWS2 comprises a memory, the memory comprises storage areas allocated to each mobile station MS2. Each storage area stores HTML data corresponding to GET requests of mobile stations, which gateway server GWS2 has received, and URLs of locations for storing the HTML data in correspondence with each other. The HTML data, which has been stored in the storage area, is transmitted to mobile stations MS2 through mobile packet communication network MPN.

Next, the operation of the present embodiment having the aforementioned configuration will be explained.

### (3-1) Operation of Gateway Server in Registering URLs

First, when a user performs a predetermined inputting operation on command inputting unit 13, CPU 111 of mobile station MS reads out a WWW browser from ROM 112 and performs a packet registration on the packet subscriber processing unit (not shown). Then, when the user inputs the URL of a home page of IP server W on command inputting unit 13, CPU 111 transmits a GET request including the URL to mobile packet communication network MPN through transmitter-receiver unit 12. IP server W, upon receiving the GET request transmitted from mobile station MS, transmits, to gateway server GWS2 through Internet INET, the HTML data of the web page designated by the URL, which the received GET request includes.

Gateway server GWS2, upon receiving the HTML data, writes the HTML data and the URL in the storage area of the memory corresponding to mobile station MS2 to which the HTML data will be transmitted. Gateway server GWS2 reads out the HTML data, which has been stored in the storage area, and transmits the HTML data to mobile station MS2.

When mobile station MS2 receives the HTML data through transmitter-receiver unit 12, CPU 111 stores the HTML data in RAM 113 and displays the image represented by the HTML data on liquid crystal display unit 14. In this situation, when the user performs a predetermined operation on command inputting unit 13, CPU 111 reads out the mobile station ID of mobile station MS2 from ROM 112 and transmits, to gateway server GWS2, a request for registering the URL, which includes the mobile station ID.

Gateway server GWS2, upon receiving the request for registration, extracts the mobile station ID from the request for registration and specifies the mobile station. Gateway server GWS2 reads out a URL which has been stored and the HTML data of the URL from the storage area corresponding to mobile station MS2. Gateway server GWS2 then performs the extraction operation which is similar to the one shown in Figs. 5 to 7. That is, gateway server GWS2 stores the URL which has been read out, in access destination storing table TBL1 of URL registration database UD corresponding to mobile station MS2 (step Sa1 in Fig. 5). Next, gateway server GWS2 extracts a character string designated by a title tag and stores the character string as title data in access destination storing table TBL1 of URL registration database UD (steps Sa2, Sa3 in Fig. 5).

After storing the URL, gateway server GWS2 reports, to mobile station MS2, that the process of storing the URL in access destination storing table TBL1 has been completed. CPU 111 of mobile station MS2, upon receiving the report from gateway server GWS2, displays a message, for example, "Do you want to register the URL of the link destination?" or the like, on liquid crystal display unit 14. At this time, when the user performs the input operation to conclude the registration, CPU 111 transmits a request for concluding the registration to gateway server GWS2 through transmitter-receiver unit 12. Gateway server GWS2, upon receiving the request for concluding the registration, concludes the processing (step Sa4 "No"). When the user performs the input operation to continue the registration, CPU 111 transmits a request for continuing the registration to gateway server GWS2.

Gateway server GWS2, upon receiving the request for continuing the registration (step Sa4 "Yes"), performs the process of steps Sa5 to Sa12. That is, in step Sa8 the process of storing telephone numbers shown in Fig. 6 is carried out, in step Sa11 the process of storing URLs shown in Fig. 7 is carried out, and in step SalO the process of storing mail addresses shown in Fig. 8 is carried out. The process of registering addresses by gateway server GWS2 is similar to that of mobile station MS according to the first embodiment, therefore it will not be explained.

### (3-2) Operation of Mobile Communication System in Searching for URLs

Next, the operation of the mobile communication system according to the present embodiment in searching URL registration database UD by using mobile station MS will be explained.

We assume that mobile station MS accesses gateway server GWS2 by the aforementioned second method, and the packet registration has already been performed. To make the explanation simple, we assume that the content of access destination storing table TBL1, and link destination storing table TBL2, which compose URL registration database UD is similar to the one shown in Figs. 3A and 3B.

First, when a user inputs the URL of a home page of gateway server GWS2 on command inputting unit 13, CPU 111 transmits a GET request including the URL. Gateway server GWS2, upon receiving the GET request, specifies mobile station MS2 on the basis of the mobile station ID included in the GET request, and specifies access destination storing table TBL1 corresponding to mobile station MS2. Gateway server GWS2 generates menu data whose URL of access destination storing table TBL1 is designated by an anchor tag, and transmits the menu data to mobile station MS2.

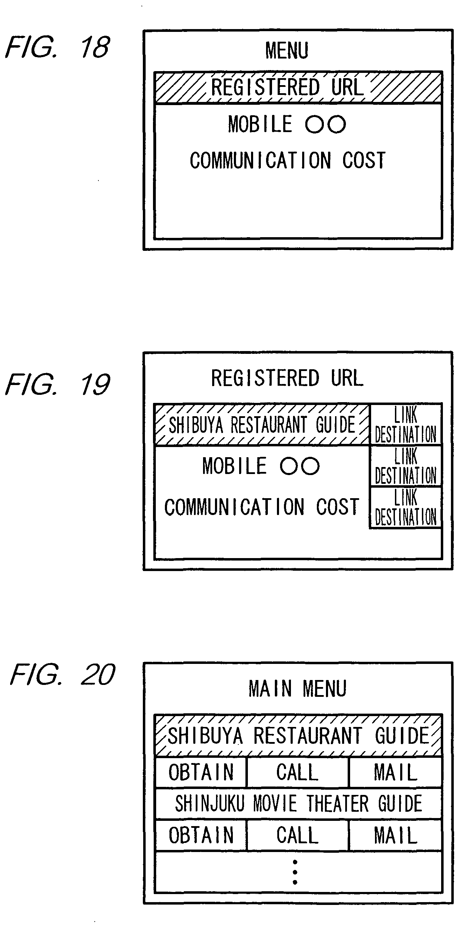

When mobile station MS2 receives the menu data, CPU 111 stores the menu data in RAM 113 and displays the image designated by the menu data on liquid crystal display unit 14. Fig. 18 is a diagram showing an example of menu data displayed on liquid crystal display unit 14. In this situation, when the user, for example, performs a predetermined operation by means of command inputting unit 13 and temporarily selects a character string, CPU 111 highlights the temporarily selected character string. In Fig. 18 "registered URL" is temporarily selected. At this stage, when the user presses the decision button of command inputting unit 13, CPU 111 extracts the URL (that is, the URL of access destination storing table TBL1 corresponding to mobile station MS2) designated by an anchor tag of menu data, and transmits a GET request including the URL to gateway server GWS2.

Gateway server GWS2, upon receiving the GET request, extracts information from access destination storing table TBL1. Gateway server GWS2 generates HTML data corresponding to the extracted information and transmits the HTML data to mobile station MS2. Specifically, the URL stored in access destination storing table TBL1 and the title data of the URL are designated by an anchor tag. The HTML data, whose URL of link destination storing table TBL2 corresponding to the URL is designated by an anchor tag, is generated and transmitted to mobile station MS.

Fig. 19 is a diagram showing an example of the image displayed on liquid crystal display unit 14 when mobile station MS2 receives the HTML data. In this situation, when the user operates the cursor key of command inputting unit 13 and temporarily selects a character string, CPU 111 highlights the character string. In Fig. 19 "restaurant guide in Shibuya" is highlighted. In this situation, when the user presses the decision button of command inputting unit 13, CPU 111 extracts the URL of "restaurant guide in Shibuya", "http://www.aaa.ne.jp", and transmits a GET request including the URL to mobile packet communication network MPN.

In the situation in which, "link destination" displayed on the right side of "restaurant guide in Shibuya" is highlighted, and the user presses the decision button, CPU 111 extracts the URL of link destination storing table TBL2 corresponding to "restaurant guide in Shibuya". CPU 111 transmits a GET request of HTTP including the URL to mobile packet communication network MPN.

Gateway server GWS2 receives the GET request and accesses link destination storing table TBL2 represented by the URL included in the GET request. Gateway server GWS2 generates HTML data, whose URL stored in link destination storing table TBL2 and title data of the URL are designated by the anchor tag, and transmits the HTML data to mobile station MS2. Mobile station MS2, upon receiving the HTML data, displays the same image as the one shown in Fig. 11 on liquid crystal display unit 14.

In this situation, when the user performs the input operation to select "Shibuya restaurant A" on command inputting unit 13, CPU 111 extracts the URL of "Shibuya restaurant A", "http://www.aaa.ne.jp/xxx", in link destination storing table TBL2 and transmits a GET request of HTTP including the URL to mobile packet communication network MPN. When the user selects "Please contact us", CPU 111 extracts the corresponding telephone number "03-1111-1111" and carries out the process of calling the telephone number. In the instance that, the HTML data includes a mail address, and if the user performs the inputting operation to select the mail address, CPU 111 carries out the process of transmitting an electronic mail to the destination of the mail address.

As described above, in the present embodiment, gateway server GWS comprises URL registration database UD and performs the process of registering addresses. Thus, mobile stations, in this embodiment, do not need to have an access destination storing table, a link destination storing table, and an address registration processing program, and therefore the storage capacity of a flash memory can be decreased. Further, it is possible to prevent deletions of registered URLs, which are caused by a breakdown of mobile stations, or operation mistakes of users.

Access destination storing table TBL1 is not provided, and only link destination storing table TBL2 may be provided in flash memory 114. URLs and so on of access destinations and link destinations may be stored together in link destination storing table TBL2. It is possible to omit URLs of access destinations. Telephone numbers which have been stored in link destination storing table TBL2 can be used not only for conversations but also, for example, to conduct data communication between mobile stations MS.

### [5] Fourth Embodiment

The configuration of the mobile communication system according to the present embodiment is similar to the one shown in Fig. 17. Thus, unless otherwise specified, components of the configuration shown in Fig. 17 are shared by the first embodiment and perform the same operation as those of the first embodiment.

URL registration database UD in the third embodiment comprises access destination storing table TBL1, and link destination storing table TBL2, which correspond to each mobile station MS2 (refer to Fig. 3). In the present embodiment, URL registration database UD, instead of these tables, comprises address management table TBL3 corresponding to each mobile station MS2 (Fig. 12). Address management table TBL3 is similar to that of the aforementioned second embodiment; therefore it will not be explained.

In the present embodiment, the HTML data, which mobile stations receive can include a home phone tag, and a home mail tag, which are similar to the tags of the second embodiment, therefore the tags will not be explained.

Next, the operation of the present embodiment will be explained. (4-1) Operation of Gateway Server in Registering URLs

First, according to the input operation which a user performs on command inputting unit 13, CPU 111 reads out a WWW browser from ROM 112 and performs a packet registration on the packet subscriber processing unit (not shown). Then, when the user inputs the URL of a home page of IP server W, by means of command inputting unit 13 of mobile station MS2, CPU 111 transmits a GET request including the URL to mobile packet communication network MPN through transmitter-receiver unit 12. IP server W, upon receiving the GET request, transmits HTML data of the URL included in the GET request to gateway server GWS2, through Internet INET. Gateway server GWS2, upon receiving the HTML data, specifies a mobile station on the basis of the mobile station ID included in the GET request, and writes the HTML data and the URL of the HTML data, in the storage area of the memory corresponding to mobile station MS2. Gateway server GWS2 reads out HTML data which has been stored in the storage area and transmits the HTML data to mobile station MS2.

When mobile station MS2 receives the HTML data, CPU 111 stores the HTML data in RAM 113 and displays the image designated by the HTML data on liquid crystal display unit 14. In this situation, when the user presses a predetermined button of command inputting unit 13, CPU 111 reads out the mobile station ID of mobile station MS2 from ROM 112 and transmits, to gateway server GWS2, a request for registering the URL including the mobile station ID.

Gateway server GWS2, upon receiving the request for registration, extracts the mobile station ID from the request for registrations and specifies the storage area and address management table TBL3, which correspond to mobile station MS2, on the basis of the mobile station ID. Gateway server GWS2 reads out a URL, and the HTML data of the web page represented by the URL, from the storage area corresponding to mobile station MS2, which transmitted the instruction for registrations.

Gateway server GWS2 then carries out the same process as shown in Figs. 14 and 15, which is described in the second embodiment. That is, gateway server GWS2 stores the URL, which has been read out, in address management table TBL3 of URL registration database UD corresponding to mobile station MS2 (step Se1 in Fig. 14). Next, gateway server GWS2 extracts a character string designated by a title tag from the HTML data, and stores the character string as title data in address management table TBL3 of URL registration database UD (step Se2, Se3 in Fig. 14). After storing the character string, gateway server GWS2 reports, to mobile station MS2, that the character string has been stored in address management table TBL3.

CPU 111, upon receiving the report transmitted from gateway server GWS2, displays the message, "Do you want to register the telephone number and the mail address corresponding to the page?" or the like, on liquid crystal display unit 14. At this stage, when the user performs on command inputting unit 13 the input operation indicating that the registration will not be performed, CPU 111 transmits a request for concluding registration to gateway server GWS2 through transmitter-receiver unit 12. Gateway server GWS2, upon receiving the request for concluding registration, concludes the processing (step Se4 "No" in Fig. 14).

When the user performs the input operation for continuing registration on command inputting unit 13, CPU 111 transmits a request for continuing registrations to gateway server GWS2 through transmitter-receiver unit 12. Gateway server GWS2, upon receiving the request for continuing registration (step Se4 "Yes" in Fig. 14), carries out the process of storing shown in Fig. 15. The process is similar to the process performed by mobile station MS in the second embodiment, therefore it will not be explained.

### (4-2) Operation of Mobile Communication System in Searching for URLs

The operation of the mobile communication system in searching URL registration database UD will be explained. In the following explanation, we assume that the content of address management table TBL3 is similar to the one shown in Fig. 12, and a packet registration has already been performed.

First, when a user inputs the URL of a home page of gateway server GWS2 on command inputting unit 13 of mobile station MS2, CPU 111 transmits a GET request including the URL. Gateway server GWS2 specifies address management table TBL3 corresponding to mobile station MS2 on the basis of a mobile station ID included in the GET request. Then, gateway server GWS2 generates menu data and transmits the menu data to mobile station MS2. The operation of generating menu data and the menu data are similar to those of the third embodiment, therefore it will not be detailed.

CPU 111, upon receiving the menu data, stores the menu data in RAM 113, and displays the image designated by the menu data on liquid crystal display unit 14. Consequently, the image shown in Fig. 18 is displayed on liquid crystal display unit 14. In this situation, when the user selects "registered URL" by means of command inputting unit 13, CPU 111 extracts the URL designated by an anchor tag of menu data (that is, the URL of address management table TBL3 corresponding to mobile station MS2), and transmits a GET request including the URL to gateway server GWS2.

Gateway server GWS2 accesses address management table TBL3 corresponding to mobile station MS2 on the basis of the transmitted GET request. Gateway server GWS2 generates HTML data corresponding to information which has been stored in address management table TBL3 and transmits the HTML data to mobile station MS2. Fig. 20 is a diagram showing an example of images displayed on liquid crystal display unit 14 when mobile station MS2 receives HTML data which has been generated in this manner. Buttons of "obtain", "calling", and "mail" are displayed on the bottom of the screen.

The button "obtain" designates the URL which has been stored in address management table TBL3 in correspondence with the title data. For example, the button "obtain" of "restaurant guide in Shibuya" designates the URL "http://www.aaa.ne.jp". When the user selects the button, CPU 111 transmits a GET request including the URL "http://www.aaa.ne.jp".

The button "calling" designates the telephone number which has been stored in address management table TBL3 in correspondence with the title data. In the instance that, the button "calling" is selected, CPU 111 calls the telephone number designated by the button. The button "mail" designates the mail address which has been stored in address management table TBL3 in correspondence with the title data. In the instance that, the button "mail" is selected, CPU 111 carries out the process of transmitting an electronic mail to the destination of the mail address designated by the button.

In the present embodiment, addresses of all link destinations in pages which have been accessed are not registered in URL registration database UD of gateway server GWS2, but only telephone numbers and mail addresses corresponding to the downloaded pages are registered. Thus, unnecessary addresses are not registered in URL registration database UD. The amount of information to be registered is less than that of the third embodiment so that the storage capacity of the storage device of gateway server GWS2 storing URL registration database UD can be decreased and the search time can be shortened.

### [6] Modification of Third and Fourth Embodiment

### <Modification 2-1>

In the third and fourth embodiment, gateway server GWS2 has a function of registering URLs. However, other server may perform registrations of URLs. In this case, mobile station MS2 transmits, to the server, HTML data, which has been obtained from IP server W on Internet INET. The server then carries out the aforementioned process of registering URLs. Thus, the burden of the process of registration to be carried out by gateway server GWS2 can be reduced.

In the third embodiment, mobile stations may comprise access destination storing table TBL1, and link destination storing table TBL2. For example, after gateway server GWS2 carries out the process of registrations, mobile station MS2 accesses gateway server GWS2 and downloads access destination storing table TBL1, and link destination storing table TBL2. Searching for URLs and so on, is performed in access destination storing table TBL1 and link destination storing table TBL2.

In this manner, both mobile station MS2 and gateway server GWS2 comprise access destination storing table TBL1 or link destination storing table TBL2. Therefore, if the address (a URL, mail address, telephone number or the like) information which has been stored in mobile station MS2 is deleted due to a breakdown of mobile station MS2 or the faulty operation of a user, deletions of address information can be prevented by downloading these tables from gateway server GWS2. Needless to say, address management table TBL3 can be provided in mobile station MS2 of the fourth embodiment in a similar fashion.

As explained above, through a receiving device or a relay device of the present invention it becomes possible to effectively perform address registrations so that the labor of a user can be reduced and communication costs can be kept down.

The invention is not limited to specific configurations of the aforementioned embodiments, and can take various other forms within the confines of the claims.

## Claims

1. A device (MS) for accessing a plurality of destinations using access information obtained from a received data set,
**a)** said access information including at least one type of destination address, such as a URL, an e-mail address or a phone number, respectively identifying one destination, said at least one type of destination address respectively identifying a specific method of access operation, such as website accessing, e-mail sending and phone calling, to be implemented for accessing said destination, comprising:
**b)** a command inputting unit (13); and
**c)** a control unit (11) including a central processing unit (111) and storing means (112, 113, 114),
**d)** said central processing unit (111) carrying out control programs stored in said storing means (112) for carrying out operations of said device (MS), said control programs including
**d1)** a registration control program for carrying out an operation of registering said access information by extracting said access information from said received data set and storing said extracted access information in said storing means;
**d2)** a plurality of access control programs each for carrying out a specific method of access operation identified by said type of destination address;
**e)** said command inputting unit (13) being operated to selectively read out said extracted and stored access information from said storing means (112, 113); and
**f)** said central processing unit (111) carrying out one of said access control programs to carry out one of the access operation methods, such as website accessing, e-mail sending and phone calling, identified by the type of the destination address included in said selectively read out access information, in order to access the destination identified by the destination address of said selectively read out access information;
wherein said received data set comprises anchor tags designating said destination addresses and title data of said destination addresses, wherein said registration control program is adapted to extract said destination addresses and title data of said destination addresses and to store said extracted title data and destination addresses corresponding to each other in a link destination storing table.

2. A device (MS) according to claim 1,
***characterized in that***
wherein the device (MS) is a mobile communication terminal.

3. A device (MS) according to claim 1,
***characterized in that***
said registration control program is further adapted to extract from said received data set title data characterizing said destination addresses; and
said storing means (111, 112, 113) comprises a link destination storing table in which said destination addresses are stored in correspondence with said title data characterizing said destination addresses.

4. A device (MS) according to claim 1,
***characterized in that***
said central processing unit (11) is adapted for generating title data characterizing said destination addresses; and
said storing means (111, 112, 113) comprises a link destination storing table in which said destination addresses are stored in correspondence with said title data characterizing said destination addresses.

5. A device (MS) according to claim 1,
***characterized in that***
said data set is a data set received from an information source through an Internet.

6. A device (MS) according to claim 5,
***characterized in that***
said data set is a web page received from an IP server through an Internet.

7. A device (MS) according to claim 1,
***characterized in that***
said central processing unit (111) is adapted to determine input commands of a user input into said command inputting unit (13)
said registration control program is adapted to extract and store said access information at a request issued by said central processing unit (111) in response to a determined input command by a user.

8. A device (MS) according to claim 1,
***characterized in that***
said registration control program is adapted to search said received data set for specific anchor tags designating said access information.

9. A device (MS) according to claim 1,
***characterized in that***
said registration control program is adapted to search said received data set for predetermined character strings input into said command inputting unit (13) by a user.

10. A device (MS) according to claim 1,
***characterized in that***
said access information is a URL, an e-mail address or a telephone number.

11. A device (MS) according to claim 10,
***characterized in that***
if said access information read out from said storing means (112, 113) by said command inputting unit (13) is a URL, said central processing unit (111) carries out an access control program for transmitting a GET request including said URL.

12. A device (MS) according to claim 10,
***characterized in that***
if said access information read out from said storing means (112, 113) by said command inputting unit (13) is an e-mail address, said central processing unit (111) carries out an access control program for transmitting an electronic mail to the destination of said e-mail address.

13. A device (MS) according to claim 10,
***characterized in that***
if said access information read out from said storing means (112, 113) by said command inputting unit (13) is a telephone number, said central processing unit (111) carries out an access control program for calling said telephone number.

14. A device (MS) according to claim 1,
***characterized in that***
said destination address of said access information identifies a respective link destination.

15. A device (MS) according to claim 1,
***characterized in that***
said received data set comprises title tags designating title data of said data set and anchor tags designating said destination addresses and title data of said destination addresses, wherein said registration control program is adapted to extract said title data of said data set and store it corresponding to a destination address of said data set in an access destination storing table (TBLS1) of said storing means.

16. A device (MS) according to claim 1,
***characterized in that***
said device (MS) further comprises a display unit (14), wherein said central processing unit (111) is adapted to display an image represented by said data set on said display unit (14).

17. A device (MS) according to claim 8 or claim 1, ***characterized in that***
said anchor tag includes an image tag designating image data as title data.

18. A communication system comprising a device (MS) according to one or more of claims 1 to 17 connected through a mobile communication network to a gateway server in turn connected through Internet to an IP server, wherein said data set is received from said IP server in response to a request message accessing said IP server .

19. A method of accessing from a device (MS) a plurality of destinations using access information obtained from a received data set,
a) said access information including at least one type of destination address, such as a URL, an e-mail address or a phone number, respectively identifying one destination, said at least one type of destination address respectively identifying a specific method of access operation, such as website accessing, e-mail sending and phone calling, to be implemented for accessing said destination, comprising:
**b)** the steps of carrying out, by a central processing unit (111) of said device (MS), control programs stored in a storing means (112) of said device (MS) for carrying out operations of said device (MS), said control programs including
**b1)** a registration control program for carrying out an operation of registering said access information by extracting said access information from said received data set and storing said extracted access information in said storing means;
b2) a plurality of access control programs each for carrying out a specific method of access operation identified by said type of destination address;
the method further comprising
c) a reading out operation, carried out by a command inputting unit (13) of said device (MS), for selectively reading out said extracted and stored access information from said storing means (112, 113); and
d) carrying out, by said central processing unit (111), one of the access operation methods, such as website accessing, e-mail sending and phone calling, identified by the type of the destination address included in said selectively read out access information, in order to access the destination identified by the destination address of said selectively read out access information;
wherein said received data set comprises anchor tags designating said destination addresses and title data of said destination addresses, wherein said registration control program is adapted to extract said destination addresses and title data of said destination addresses and to store said extracted title data and destination addresses corresponding to each other in a link destination storing table.

## Patentansprüche

1. Vorrichtung (MS) zum Zugreifen auf eine Vielzahl von Bestimmungsorten unter Verwendung von Zugriffsinformationen erhalten von einem empfangenen Datensatz,
**a)** wobei die Zugriffsinformationen mindestens eine Art von Bestimmungsortadresse, wie eine URL, eine E-Mail-Adresse oder eine Telefonnummer einschließen, die entsprechend einen Bestimmungsort identifizieren, wobei diese mindestens eine Art der Bestimmungsortadresse entsprechend ein spezifisches Verfahren einer Zugriffsoperation identifiziert, wie Webseitenzugriff, E-Mail schicken oder einen Telefonanruf, um zum Zugreifen auf den Bestimmungsort implementiert zu werden, umfassend:
**b)** eine Befehlseingabeeinheit (13); und
**c)** eine Steuereinheit (11), einschließend eine zentrale Verarbeitungseinheit (111) und Speichermittel (112, 113, 114),
**d)** wobei die zentrale Verarbeitungseinheit (111) Steuerprogramme, gespeichert in den Speichermitteln (112), zum Ausführen von Operationen der Vorrichtung (MS), ausführt, wobei die Steuerprogramme einschließen
**d1)** ein Registrierungssteuerprogramm zum Ausführen einer Operation des Registrierens der Zugriffsinformationen mittels Extrahierens der Zugriffsinformationen aus dem empfangenen Datensatz und Speichern der extrahierten Zugriffsinformationen in den Speichermitteln;
**d2)** eine Vielzahl von Zugriffssteuerprogrammen, jedes zum Ausführen eines spezifischen Verfahrens von Zugriffsoperation, identifiziert mittels der Art der Bestimmungsortadresse;
**e)** wobei die Befehlseingabeeinheit (13) betrieben wird, um selektiv die extrahierten und gespeicherten Zugriffsinformationen aus den Speichermitteln (112, 113) auszulesen; und
**f)** wobei die zentrale Verarbeitungseinheit (111) eines der Zugriffssteuerprogramme ausführt, um eines der Zugriffsoperationsverfahren auszuführen, wie Webseitenzugriff, E-Mail schicken und Telefonanruf, identifiziert mittels der Art der Bestimmungsortadresse, eingeschlossen in den selektiv ausgelesenen Zugriffsinformationen, um auf den Bestimmungsort, identifiziert mittels der Bestimmungsortadresse der selektiv ausgelesenen Zugriffsinformationen, zuzugreifen;
wobei der empfangene Datensatz Anchortags umfasst, die die Bestimmungsortadressen und Titeldaten der Bestimmungsortadressen bestimmen, wobei das Registrierungssteuerprogramm eingerichtet ist, um die Bestimmungsortadressen und die Titeldaten der Bestimmungsortadressen zu extrahieren und um die extrahierten Titeldaten und Bestimmungsortadressen zu speichern, die einander in einer Verknüpfungsbestimmungsortspeichertabelle entsprechen.

2. Vorrichtung (MS) nach Anspruch 1,
***dadurch gekennzeichnet, dass***
wobei die Vorrichtung (MS) ein Mobilkommunikationsendgerät ist.

3. Vorrichtung (MS) nach Anspruch 1,
***dadurch gekennzeichnet, dass***
das Registrierungssteuerprogramm weiter eingerichtet ist, um aus dem empfangenen Datensatz Titeldaten zu extrahieren, die die Bestimmungsortadressen charakterisieren; und
wobei die Speichermittel (111, 112, 113) eine Verknüpfungsbestimmungsortspeichertabelle umfassen, in der Bestimmungsortadressen in Korrespondenz mit den Titeldaten gespeichert sind, die die Bestimmungsortadressen charakterisieren.

4. Vorrichtung (MS) nach Anspruch 1,
***dadurch gekennzeichnet, dass***
die zentrale Verarbeitungseinheit (11) eingerichtet ist zum Erzeugen von Titeldaten, die die Bestimmungsortadressen charakterisieren; und
wobei die Speichermittel (111, 112, 113) eine Verknüpfungsbestimmungsortspeichertabelle umfassen, in der die Bestimmungsortadressen in Korrespondenz mit den Titeldaten gespeichert sind, die die Bestimmungsortadressen charakterisieren.

5. Vorrichtung (MS) nach Anspruch 1,
***dadurch gekennzeichnet, dass***
der Datensatz ein Datensatz empfangen von einer Informationsquelle durch ein Internet ist.

6. Vorrichtung (MS) nach Anspruch 5,
***dadurch gekennzeichnet, dass***
der Datensatz eine Webseite empfangen von einem IP Server durch ein Internet ist.

7. Vorrichtung (MS) nach Anspruch 1,
***dadurch gekennzeichnet, dass***
die zentrale Verarbeitungseinheit (11) eingerichtet ist, Eingabebefehle einer Benutzereingabe in die Befehlseingabeeinheit (13) zu bestimmen,
wobei das Registrierungssteuerprogramm eingerichtet ist, um Zugriffsinformationen auf eine Anfrage ausgegeben mittels der zentralen Verarbeitungseinheit (111) in Antwort auf einen bestimmten Eingabebefehl durch einen Benutzer zu extrahieren und zu speichern.

8. Vorrichtung (MS) nach Anspruch 1,
***dadurch gekennzeichnet, dass***
das Registrierungssteuerprogramm eingerichtet ist, um den empfangenen Datensatz auf spezifische Anchortags zu durchsuchen, die die Zugriffsinformationen bestimmen.

9. Vorrichtung (MS) nach Anspruch 1,
***dadurch gekennzeichnet, dass***
das Registrierungssteuerprogramm eingerichtet ist, um den empfangenen Datensatz auf vorbestimmte Zeichenketten eingegeben in die Befehlseingabeeinheit (13) durch einen Benutzer zu durchsuchen.

10. Vorrichtung (MS) nach Anspruch 1,
***dadurch gekennzeichnet, dass***
die Zugriffsinformationen eine URL, eine E-Mail-Adresse oder eine Telefonnummer sind.

11. Vorrichtung (MS) nach Anspruch 10,
***dadurch gekennzeichnet, dass,***
falls die Zugriffsinformationen ausgelesen aus den Speichermitteln (112, 113) mittels der Befehlseingabeeinheit (13) eine URL sind, die zentrale Verarbeitungseinheit (111) ein Zugriffssteuerprogramm zum Übertragen einer GET Anfrage die URL einschließend ausführt.

12. Vorrichtung (MS) nach Anspruch 10,
***dadurch gekennzeichnet, dass,***
falls die Zugriffsinformationen ausgelesen aus den Speichermitteln (112, 113) mittels der Befehlseingabeeinheit (13) eine E-Mail-Adresse sind, die zentrale Verarbeitungseinheit (111) ein Zugriffssteuerprogramm zum Übertragen einer elektronischen Post an den Bestimmungsort der E-Mail-Adresse ausführt.

13. Vorrichtung (MS) nach Anspruch 10,
***dadurch gekennzeichnet, dass,***
falls die Zugriffsinformationen ausgelesen aus den Speichermitteln (112, 113) mittels der Befehlseingabeeinheit (13) eine Telefonnummer sind, die zentrale Verarbeitungseinheit (111) ein Zugriffssteuerprogramm zum Anrufen der Telefonnummer ausführt.

14. Vorrichtung (MS) nach Anspruch 1,
***dadurch gekennzeichnet, dass***
die Bestimmungsortadressen der Zugriffsinformationen einen entsprechenden Verknüpfungsbestimmungsort identifizieren.

15. Vorrichtung (MS) Anspruch 1,
***dadurch gekennzeichnet, dass***
der empfangene Datensatz Titeltags, die Titeldaten des Datensatzes bestimmen, und Anchortags, die die Bestimmungsortadressen und die Titeldaten der Bestimmungsortadressen bestimmen, umfasst, wobei das Registrierungssteuerprogramm eingerichtet ist, um die Titeldaten des Datensatzes zu extrahieren und sie entsprechend einer Bestimmungsortadresse des Datensatzes in einer Zugriffsbestimmungsortspeichertabelle (TBLS1) der Speichermittel zu speichern.

16. Vorrichtung (MS) nach Anspruch 1,
***dadurch gekennzeichnet, dass***
die Vorrichtung (MS) weiter eine Anzeigeeinheit (14) umfasst, wobei die zentrale Verarbeitungseinheit (111) eingerichtet ist, um ein Bild, repräsentiert mittels des Datensatzes, auf der Anzeigeeinheit (14) anzuzeigen.

17. Vorrichtung (MS) nach Anspruch 8 oder Anspruch 1,
***dadurch gekennzeichnet, dass***
der Anchortag einen Bildtag einschließt, der Bilddaten als Titeldaten bestimmt.

18. Kommunikationssystem, umfassend eine Vorrichtung (MS) nach einem oder mehreren der Ansprüche 1 bis 17, verbunden durch ein Mobilkommunikationsnetzwerk mit einem Gateway Server, der wiederum durch Internet mit einem IP Server verbunden ist, wobei der Datensatz von dem IP Server als Antwort auf eine Anfragenachricht empfangen wird, die auf den IP Server zugreift.

19. Verfahren zum Zugreifen von einer Vorrichtung (MS) auf eine Vielzahl von Bestimmungsorten unter Verwendung von Zugriffsinformationen erhalten aus einem empfangenen Datensatz,
**a)** wobei die Zugriffsinformationen mindestens eine Art von Bestimmungsortadresse umfassen, wie eine URL, eine E-Mail-Adresse oder eine Telefonnummer, die entsprechend einen Bestimmungsort identifizieren, wobei die mindestens eine Art von Bestimmungsortadresse entsprechend ein spezifisches Verfahren einer Zugriffsoperation identifiziert, wie Webseitenzugriff, E-Mail schicken und einen Telefonanruf, um zum Zugreifen auf den Bestimmungsort implementiert zu werden, umfassend:
**b)** die Schritte des Ausführens, mittels einer zentralen Verarbeitungseinheit (111) der Vorrichtung (MS), von Steuerprogrammen, gespeichert in Speichermitteln (112) der Vorrichtung (MS) zum Ausführen von Operationen der Vorrichtung (MS), wobei die Steuerprogramme einschließen
**b1)** ein Registrierungssteuerprogramm zum Ausführen einer Operation des Registrierens von Zugriffsinformationen mittels Extrahierens von Zugriffsinformationen aus dem empfangenen Datensatz und Speichern der extrahierten Zugriffsinformationen in den Speichermitteln;
**b2)** eine Vielzahl von Zugriffssteuerprogrammen, jedes zum Ausführen eines spezifischen Verfahrens von Zugriffsoperationen identifiziert mittels der Art der Bestimmungsortadressen;
wobei das Verfahren weiter umfasst:
**c)** eine Ausleseoperation, ausgeführt mittels einer Befehlseingabeeinheit (13) der Vorrichtung (MS) zum selektiven Auslesen der extrahierten und gespeicherten Zugriffsinformationen aus den Speichermitteln (112, 113); und
**d)** Ausführen, mittels der zentralen Verarbeitungseinheit (111), eines der Zugriffsoperationsverfahren, wie einen Webseitenzugriff, eine E-Mail schicken und einen Telefonanruf, identifiziert mittels der Art der Bestimmungsortadresse, eingeschlossen in den selektiv ausgelesenen Zugriffsinformationen, um auf den Bestimmungsort, identifiziert mittels der Bestimmungsortadresse der selektiv ausgelesenen Zugriffsinformationen, zuzugreifen;
wobei der empfangene Datensatz Anchortags umfasst, die die Bestimmungsortinformationen und die Titeldaten der Bestimmungsortadressen bestimmen, wobei das Registrierungssteuerprogramm eingerichtet ist, um die Bestimmungsortadressen und die Titeldaten der Bestimmungsortadressen zu extrahieren und die extrahierten Titeldaten und Bestimmungsortadressen entsprechend zueinander in einer Verknüpfungsbestimmungsortspeichertabelle zu speichern.

## Revendications

1. Dispositif (MS) pour accéder à une pluralité de destinations à l'aide d'informations d'accès obtenues d'un ensemble de données reçu,
**a)** lesdites informations d'accès incluant au moins un type d'adresse de destination, telle qu'une URL, une adresse de courrier électronique ou un numéro de téléphone, identifiant respectivement une destination, ledit au moins un type d'adresse de destination identifiant respectivement un procédé spécifique d'opération d'accès, tel qu'un accès à un site Web, un envoi de courrier électronique et un appel téléphonique, à mettre en oeuvre pour accéder à ladite destination, comprenant :
**b)** une unité d'entrée de commande (13) ; et
**c)** une unité de commande (11) incluant une unité centrale de traitement (111) et un moyen de stockage (112, 113, 114),
**d)** ladite unité centrale de traitement (111) exécutant des programmes de commande stockés dans ledit moyen de stockage (112) pour exécuter des opérations dudit dispositif (MS), lesdits programmes de commande incluant
**d1)** un programme de commande d'enregistrement pour exécuter une opération d'enregistrement desdites informations d'accès par extraction desdites informations d'accès dudit ensemble de données reçu et par stockage desdites informations d'accès extraites dans ledit moyen de stockage ;
**d2)** une pluralité de programmes de commande d'accès, servant chacun à exécuter un procédé spécifique d'opération d'accès identifié par ledit type d'adresse de destination ;
**e)** ladite unité d'entrée de commande (13) étant employée pour lire sélectivement lesdites informations d'accès extraites et stockées, dudit moyen de stockage (112, 113) ; et
**f)** ladite unité centrale de traitement (111) exécutant un desdits programmes de commande d'accès pour exécuter un des procédés d'opération d'accès, tels qu'un accès à un site Web, un envoi de courrier électronique et un appel téléphonique, identifié par le type de l'adresse de destination inclus dans lesdites informations d'accès lues sélectivement, afin d'accéder à la destination identifiée par l'adresse de destination desdites informations d'accès lues sélectivement ;
dans lequel ledit ensemble de données reçu comprend des balises d'ancrage désignant lesdites adresses de destination et des données de titre desdites adresses de destination, dans lequel ledit programme de commande d'enregistrement est adapté pour extraire lesdites adresses de destination et des données de titre desdites adresses de destination et pour stocker lesdites données de titre et adresses de destination extraites correspondant les unes aux autres dans une table de stockage de destinations de liaison.

2. Dispositif (MS) selon la revendication 1,
***caractérisé en ce que***
dans lequel le dispositif (MS) est un terminal de communication mobile.

3. Dispositif (MS) selon la revendication 1,
***caractérisé en ce que***
ledit programme de commande d'enregistrement est en outre adapté pour extraire dudit ensemble de données reçu des données de titre caractérisant lesdites adresses de destination ; et
ledit moyen de stockage (111, 112, 113) comprend une table de stockage de destinations de liaison dans laquelle lesdites adresses de destination sont stockées en correspondance avec lesdites données de titre caractérisant lesdites adresses de destination.

4. Dispositif (MS) selon la revendication 1,
***caractérisé en ce que***
ladite unité centrale de traitement (11) est adaptée pour générer des données de titre caractérisant lesdites adresses de destination ; et
ledit moyen de stockage (111, 112, 113) comprend une table de stockage de destinations de liaison dans laquelle lesdites adresses de destination sont stockées en correspondance avec lesdites données de titre caractérisant lesdites adresses de destination.

5. Dispositif (MS) selon la revendication 1,
***caractérisé en ce que***
ledit ensemble de données est un ensemble de données reçu d'une source d'informations par le biais d'un Internet.

6. Dispositif (MS) selon la revendication 5,
***caractérisé en ce que***
ledit ensemble de données est une page Web reçue d'un serveur IP par le biais d'un Internet.

7. Dispositif (MS) selon la revendication 1,
***caractérisé en ce que***
ladite unité centrale de traitement (111) est adaptée pour déterminer des commandes d'entrée d'une entrée d'utilisateur dans ladite unité d'entrée de commande (13)
ledit programme de commande d'enregistrement est adapté pour extraire et stocker lesdites informations d'accès sur une requête émise par ladite unité centrale de traitement (111) en réponse à une commande d'entrée déterminée par un utilisateur.

8. Dispositif (MS) selon la revendication 1,
***caractérisé en ce que***
ledit programme de commande d'enregistrement est adapté pour rechercher dans ledit ensemble de données reçu des balises d'ancrage spécifiques désignant lesdites informations d'accès.

9. Dispositif (MS) selon la revendication 1,
***caractérisé en ce que***
ledit programme de commande d'enregistrement est adapté pour rechercher dans ledit ensemble de données reçu des chaînes de caractères prédéterminées entrées dans ladite unité d'entrée de commande (13) par un utilisateur.

10. Dispositif (MS) selon la revendication 1,
***caractérisé en ce que***
lesdites informations d'accès sont une URL, une adresse de courrier électronique ou un numéro de téléphone.

11. Dispositif (MS) selon la revendication 10,
***caractérisé en ce que***
si lesdites informations d'accès lues à partir dudit moyen de stockage (112, 113) par ladite unité d'entrée de commande (13) sont une URL, ladite unité centrale de traitement (111) exécute un programme de commande d'accès pour transmettre une requête GET incluant ladite URL.

12. Dispositif (MS) selon la revendication 10,
***caractérisé en ce que***
si lesdites informations d'accès lues à partir dudit moyen de stockage (112, 113) par ladite unité d'entrée de commande (13) sont une adresse de courrier électronique, ladite unité centrale de traitement (111) exécute un programme de commande d'accès pour transmettre un courrier électronique à la destination de ladite adresse de courrier électronique.

13. Dispositif (MS) selon la revendication 10,
***caractérisé en ce que***
si lesdites informations d'accès lues à partir dudit moyen de stockage (112, 113) par ladite unité d'entrée de commande (13) sont un numéro de téléphone, ladite unité centrale de traitement (111) exécute un programme de commande d'accès pour appeler ledit numéro de téléphone.

14. Dispositif (MS) selon la revendication 1,
***caractérisé en ce que***
ladite adresse de destination desdites informations d'accès identifie une destination de liaison respective.

15. Dispositif (MS) selon la revendication 1,
***caractérisé en ce que***
ledit ensemble de données reçu comprend des balises de titre désignant des données de titre dudit ensemble de données et des balises d'ancrage désignant lesdites adresses de destination et des données de titre desdites adresses de destination, dans lequel ledit programme de commande d'enregistrement est adapté pour extraire lesdites données de titre dudit ensemble de données et pour les stocker en correspondance avec une adresse de destination dudit ensemble de données dans une table de stockage de destinations d'accès (TBLS1) dudit moyen de stockage.

16. Dispositif (MS) selon la revendication 1,
***caractérisé en ce que***
ledit dispositif (MS) comprend en outre une unité d'affichage (14), dans lequel ladite unité centrale de traitement (111) est adaptée pour afficher une image représentée par ledit ensemble de données sur ladite unité d'affichage (14).

17. Dispositif (MS) selon la revendication 8 ou la revendication 1, ***caractérisé en ce que***
ladite balise d'ancrage inclut une balise d'image désignant des données d'image en tant que données de titre.

18. Système de communication comprenant un dispositif (MS) selon une ou plusieurs des revendications 1 à 17 connecté par le biais d'un réseau de communication mobile à un serveur de passerelle à son tour connecté par le biais de l'Internet à un serveur IP, dans lequel ledit ensemble de données est reçu dudit serveur IP en réponse à un message de requête accédant audit serveur IP.

19. Procédé d'accès depuis un dispositif (MS) à une pluralité de destinations à l'aide d'informations d'accès obtenues d'un ensemble de données reçu,
**a)** lesdites informations d'accès incluant au moins un type d'adresse de destination, telle qu'une URL, une adresse de courrier électronique ou un numéro de téléphone, identifiant respectivement une destination, ledit au moins un type d'adresse de destination identifiant respectivement un procédé spécifique d'opération d'accès, tel qu'un accès à un site Web, un envoi de courrier électronique et un appel téléphonique, à mettre en oeuvre pour accéder à ladite destination, comprenant :
**b)** les étapes consistant en l'exécution, par une unité centrale de traitement (111) dudit dispositif (MS), de programmes de commande stockés dans un moyen de stockage (112) dudit dispositif (MS) pour exécuter des opérations dudit dispositif (MS), lesdits programmes de commande incluant
**b1)** un programme de commande d'enregistrement pour exécuter une opération d'enregistrement desdites informations d'accès par extraction desdites informations d'accès dudit ensemble de données reçu et stockage desdites informations d'accès extraites dans ledit moyen de stockage ;
**b2)** une pluralité de programmes de commande d'accès servant à exécuter chacun un procédé spécifique d'opération d'accès identifié par ledit type d'adresse de destination ;
le procédé comprenant en outre
**c)** une opération de lecture, exécutée par une unité d'entrée de commande (13) dudit dispositif (MS), pour lire sélectivement lesdites informations d'accès extraites et stockées à partir dudit moyen de stockage (112, 113) ; et
**d)** l'exécution, par ladite unité centrale de traitement (111), d'un des procédés d'opération d'accès, tel qu'un accès à un site Web, un envoi de courrier électronique et un appel téléphonique, identifié par le type de l'adresse de destination incluse dans lesdites informations d'accès lues sélectivement, afin d'accéder à la destination identifiée par l'adresse de destination desdites informations d'accès lues sélectivement ;
dans lequel ledit ensemble de données reçu comprend des balises d'ancrage désignant lesdites adresses de destination et des données de titre desdites adresses de destination, dans lequel ledit programme de commande d'enregistrement est adapté pour extraire lesdites adresses de destination et des données de titre desdites adresses de destination et pour stocker lesdites données de titre et adresses de destination extraites correspondant les unes aux autres dans une table de stockage de destinations de liaison.
